Europäisches Patentamt

European Patent Office

Office européen des brevets

(19)

(11) **EP 1 077 784 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: **99920452.2**

(22) Anmeldetag: **14.05.1999**

(51) Int Cl.⁷: **B23K 9/00**

(86) Internationale Anmeldenummer:
**PCT/AT1999/000123**

(87) Internationale Veröffentlichungsnummer:
**WO 1999/058285 (18.11.1999 Gazette 1999/46)**

(54) **VERFAHREN ZUM STEUERN EINES SCHWEISSGERÄTES UND STEUERVORRICHTUNG HIERFÜR**

METHOD FOR CONTROLLING A WELDING APPARATUS AND CORRESPONDING CONTROL DEVICE

PROCEDE DE COMMANDE D'UN POSTE DE SOUDURE ET DISPOSITIF DE COMMANDE ASSOCIE

(84) Benannte Vertragsstaaten:
**CH DE DK ES FI FR GB IT LI PT SE**
Benannte Erstreckungsstaaten:
**SI**

(30) Priorität: **13.05.1998 AT 82698**

(43) Veröffentlichungstag der Anmeldung:
**28.02.2001 Patentblatt 2001/09**

(73) Patentinhaber: **Fronius International GmbH
4643 Pettenbach (AT)**

(72) Erfinder:
• **JANK, Vinzenz
A-4030 Linz (AT)**

• **RÜHRNÖSSL, Manfred
A-4030 Linz (AT)**
• **FRAUENSCHUH, Rupert
A-4621 Sipbachzell (AT)**
• **FRIEDL, Helmut
A-4621 Sipbachzell (AT)**

(74) Vertreter: **Secklehner, Günter
Rechtsanwalt,
Pyhrnstrasse 1
8940 Liezen (AT)**

(56) Entgegenhaltungen:
**EP-A1- 0 865 858**     **WO-A1-96/40465**
**DE-A1- 4 228 589**     **US-A- 5 571 431**

**Beschreibung**

Die Erfindung betrifft ein Verfahren zum Steuern eines Schweißgerätes bzw. einer Stromquelle sowie eine Steuervorrichtung für ein Schweißgerät, wie dies in den Ansprüchen 1 und 21 angegeben ist.

Es sind bereits Verfahren zum Steuern von Schweißgeräten bzw. Stromquellen sowie eine hierzu benötigte Steuervorrichtung bekannt, bei der über eine Ein- und/oder Ausgabevorrichtung unterschiedliche Schweißparameter, wie beispielsweise ein Schweißstrom, ein Zusatzmaterial, ein Schweißverfahren, usw., eingestellt werden kann, wobei aufgrund der eingestellten Schweißparameter die Steuervorrichtung eine entsprechende Steuerung der einzelnen Komponenten des Schweißgerätes durchführt, sodaß ein Benutzer einen entsprechenden Schweißprozeß durchführen kann.

Aus der WO 97/10919 A, insbesondere der EP 0 865 858 A1, ist eine automatisches Schweißeingabevorrichtung bekannt, welche mit einer Roboterschweißanlage, insbesondere mit einem Roboter und einem Schweißgerät, verbunden wird. Dabei kann ein Benutzer über die Schweißeingabevorrichtung, insbesondere über einen Computerschirm, die unterschiedlichsten Parameter einstellen, worauf von dem Computer ein Schweißprozeß ermittelt wird und die entsprechenden Werte an die Roboterschweißanlage weitergeleitet werden. Der Benutzer kann über die Schweißeingabevorrichtung die Form bzw. die Ausbildung der Schweißverbindung und der Schweißraupe, welche graphisch dargestellt sind, verändern, wobei die weiteren Parameter für die Bildung dieser Schweißverbindung verändert werden und diese an die Roboterschweißanlage weitergeleitet werden. Durch eine derartige graphische Eingabemöglichkeit zur Bestimmung der Form einer Schweißnaht wird zwar eine Vereinfachung bei der Bildung einer einfachen Schweißnaht bzw. die Einstellung des Schweißgerätes zur Bildung einer einfachen Schweißnahtform erreicht, die gewünschte Schweißnaht kann jedoch fallweise nicht erzielt werden.

Der vorliegenden Erfindung liegt die Aufgabe zugrunde, ein Verfahren zum Steuern eines Schweißgerätes bzw. einer Stromquelle und eine Steuervorrichtung zu schaffen, bei der durch einfaches Eingeben bzw. Ändern von Schweißparametern ein entsprechender Schweißprozeß errechnet und durchgeführt werden kann.

Diese Aufgabe der Erfindung wird durch die Maßnahmen gemäß Anspruch 1 gelöst. Vorteilhaft ist hierbei, daß durch die Einstellung der Fläche bzw. des Querschnittes der Kehlnaht, der Benutzer für die Schweißparameterfindung unterstützt wird, sodaß eine erhebliche Zeiteinsparung für die Findung der einzelnen Schweißparameter erreicht wird, da der Benutzer nur wenige bzw. keine Probeschweißungen für die Bildung einer entsprechenden Kehlnaht mehr benötigt. Ein weiterer Vorteil liegt darin, daß zur Bildung einer entsprechenden Kehlnaht persönliche Schweißparameter, die sich der Benutzer über die Jahre angewohnt hat, wie dies beispielsweise bei der Schweißgeschwindigkeit der Fall ist, in der Steuervorrichtung bzw. im Schweißgerät hinterlegt werden können, sodaß für die Bildung einer entsprechenden vorgegebenen Schweißnaht benutzerspezifische Schweißparameter für die Berechnung der Schweißnaht bzw. der einzelnen Schweißparameter herangezogen werden können.

Weiters wird in vorteilhafter Weise erreicht, daß für die Bildung einer entsprechend vorgegebenen Schweißnaht durch die Berechnung der einzelnen Schweißparameter vom Schweißgerät bzw. von der Steuervorrichtung diese Schweißnaht von einem nicht trainierten Fachpersonal ohne aufwendige Probeschweißungen durchgeführt werden kann.

Weitere vorteilhafte Ausbildungen sind in den Ansprüchen 2 bis 20 beschrieben. Die damit erzielbaren Vorteile sind der detaillierten Figurenbeschreibung zu entnehmen.

Die Erfindung umfaßt weiters auch eine Steuervorrichtung für ein Schweißgerät, wie diese im Anspruch 21 beschrieben ist.

Vorteilhaft ist hierbei, daß ein exakter Schweißprozeß von der Steuervorrichtung für eine bestimmte Schweißnaht berechnet wird, wodurch Fehlschweißungen vermieden werden.

Weitere vorteilhafte Ausbildungen sind in den Ansprüchen 22 bis 24 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:

Fig. 1    ein Übersichtsbild eines erfindungsgemäßen Schweißgerätes in vereinfachter, schematischer Darstellung;

Fig. 2    ein Blockschaltbild einer Steuervorrichtung des Schweißgerätes in vereinfachter, schematischer Darstellung;

Fig. 3    eine Oberfläche der Ein- und/oder Ausgabevorrichtung des Schweißgerätes in vereinfachter, schematischer Darstellung;

Fig. 4    eine weitere Ausführungsform der Oberfläche der Ein- und/oder Ausgabevorrichtung des Schweißgerätes in vereinfachter, schematischer Darstellung;

Fig. 5    eine andere Ausbildung der Oberfläche der Ein- und/oder Ausgabevorrichtung des Schweißgerätes in vereinfachter, schematischer Darstellung;

Fig. 6    eine weitere Ausbildung der Oberfläche der Ein- und/oder Ausgabevorrichtung in vereinfachter, schematischer Darstellung;

Fig. 7    ein Schaubild zur Erfassung der Schweißgeschwindigkeit eines Schweißbrenners des Schweißgerätes in vereinfachter, schematischer Darstellung.

Einführend sei festgehalten, daß in den unterschiedlich beschriebenen Ausführungsformen gleiche Teile mit gleichen Bezugzeichen bzw. gleichen Bauteilbezeichnungen versehen werden, wobei die in der gesamten Beschreibung enthaltene Offenbarung sinngemäß auf gleiche Teile mit gleichen Bezugzeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige erfindungsgemäße Lösungen bilden.

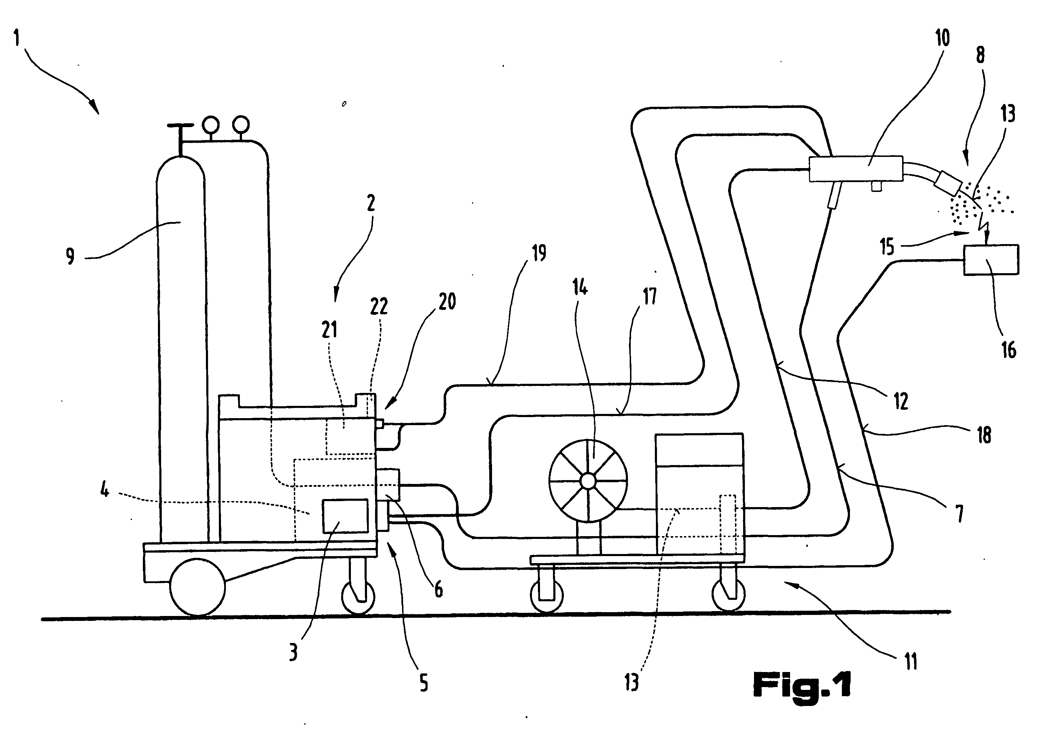

In Fig. 1 ist ein Schweißgerät 1 für verschiedenste Schweißverfahren, wie zum Beispiel MIG/MAG-Schweißen bzw. TIG- oder WIG-Schweißen, gezeigt. Das Schweißgerät 1 umfaßt eine Stromquelle 2 mit einem Leistungteil 3, eine Steuervorrichtung 4 und einem dem Leistungteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise Stickstoff, Helium oder Argon und dergleichen, zwischen einem Gasspeicher 9 und einem Schweißbrenner 10 angeordnet ist.

Zudem wird über die Steuervorrichtung 4 auch noch ein Drahtvorschubgerät 11 angesteuert, wobei über eine Versorgungsleitung 12 ein Schweißdraht 13 von einer Vorratstrommel 14 in dem Bereich des Schweißbrenners 10 zugeführt wird. Der Strom zum Aufbau eines Lichtbogens 15 zwischen dem Schweißdraht 13 und einem Werkstück 16 wird über eine Versorgungsleitung 17, 18 vom Leistungteil 3 der Stromquelle 2 dem Schweißbrenner 10 bzw. dem Schweißdraht 13 zugeführt.

Zum Kühlen des Schweißbrenners 10 wird dieser über einen Kühlkreislauf 19 unter Zwischenschaltung eines Strömungswächters 20 mit einem Wasserbehälter 21 verbunden, wodurch bei der Inbetriebnahme des Schweißbrenners 10 der Kühlkreislauf 19 von der Steuervorrichtung 4 gestartet werden kann und somit eine Kühlung des Schweißbrenners 10 bzw. einer Gasdüse des Schweißbrenners 10 bewirkt wird. Selbstverständlich ist es möglich, daß ein externer Kühlkreislauf 19, wie er bereits aus dem Stand der Technik bekannt ist, eingesetzt werden kann.

Weiters weist das Schweißgerät 1 eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten des Schweißgerätes 1 entsprechend den vorgegeben Schweißparametern angesteuert. Hierzu ist es ebenfalls möglich, daß das Schweißgerät 1 mit einer externen Ein- und/oder Ausgabevorrichtung 22, wie beispielsweise einem Computer, einer SPS oder einem Bedienelement, usw., verbunden werden kann.

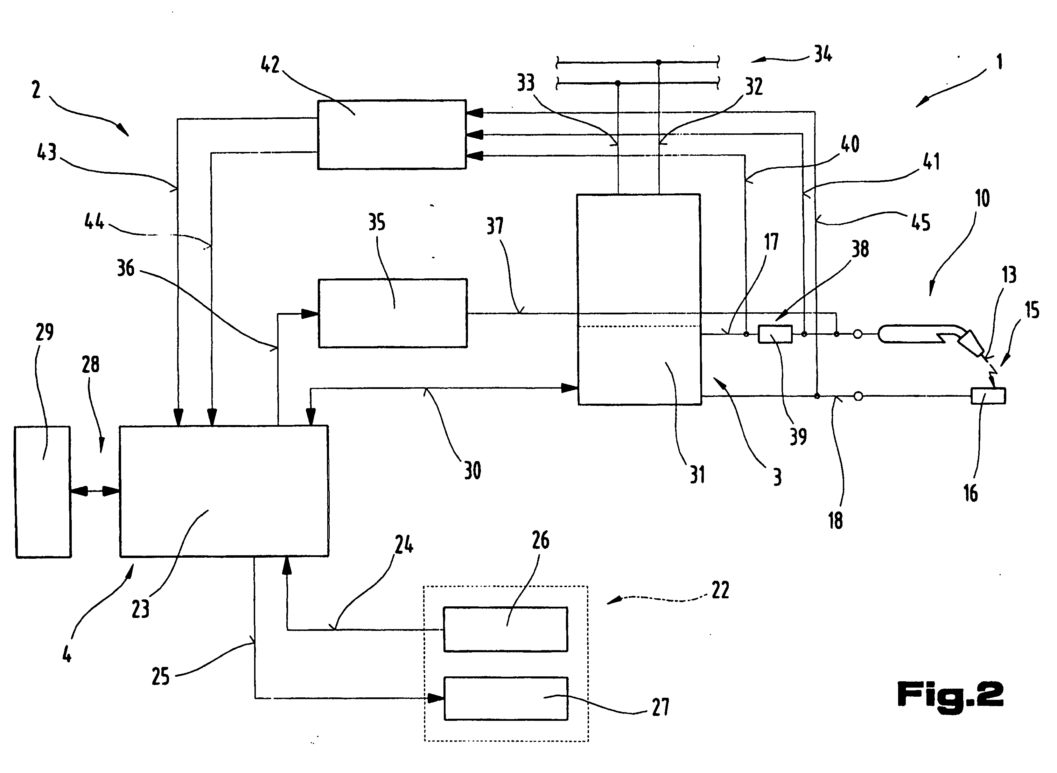

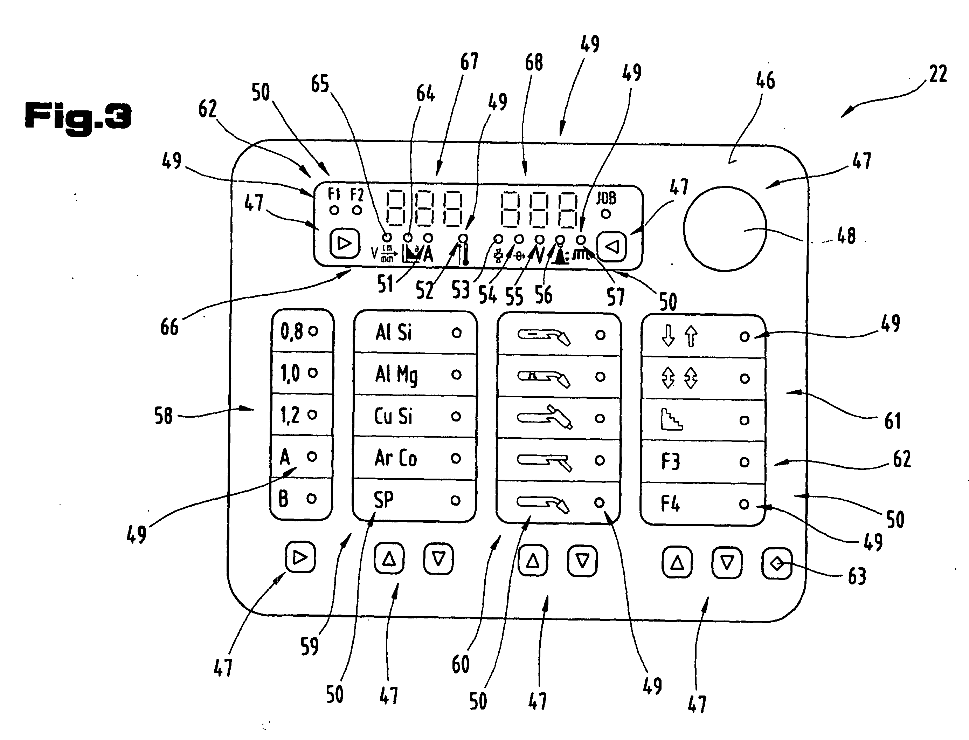

In den Fig. 2 und 3 ist ein Blockschaltbild des Schweißgerätes 1 und eine detaillierte Darstellung der Ein- und/oder Ausgabevorrichtung 22 dargestellt.

Die Steuervorrichtung 4 wird bevorzugt aus einer Mikroprozessorsteuerung 23 oder einer konventionellen analogen oder digitalen Steuerung gebildet. An einem Eingang der Steuervorrichtung 4, insbesondere der Mikroprozessorsteuerung 23, ist über mehrere Leitungen 24, 25 die Ein- und/oder Ausgabevorrichtung 22 angeschlossen, wobei der Übersichtlichkeit halber nur jeweils eine Leitung 24, 25 dargestellt ist. Dabei ist es jedoch möglich, daß die Ein- und/oder Ausgabevorrichtung 22 durch getrennte Elemente, also durch eine Eingabevorrichtung 26 und eine Ausgabevorrichtung 27, gebildet sein kann. Weiters ist es möglich, daß die Eingabevorrichtung 26 durch eine Tastatur oder durch jegliche andere Arten von Eingabemöglichkeiten, zum Beispiel durch Potentiometer, Touchscreen oder Taster, usw., gebildet sein kann. Die Ausgabevorrichtung 27 kann beispielsweise durch eine Displayanzeige, eine LED-Anzeige, eine LCD-Anzeige, eine Digitalanzeige, einen Bildschirm oder einen Touchscreen gebildet werden. Der Datenaustausch zwischen der Ein- und/oder Ausgabevorrichtung 22, insbesondere der Eingabevorrichtung 26 und der Ausgabevorrichtung 27, und der Steuervorrichtung 4 erfolgt über die Leitungen 24, 25. Es ist auch möglich, daß die Steuervorrichtung 4 eine standardisierte Schnittstelle aufweisen kann, sodaß ein Datenaustausch bzw. die Einstellung des Schweißgerätes 1 von einer externen Komponente, wie beispielsweise einem Roboter, durchgeführt werden kann.

An weiteren Ein- und/oder Ausgängen der Mikroprozessorsteuerung 23 bzw. der Steuervorrichtung 4 ist beispielsweise über ein Bussystem 28, welches aus Adress- und Datenleitungen besteht, eine Speichervorrichtung 29 angeschlossen, sodaß entsprechende Daten bzw. Steuerprogramme hinterlegt werden können.

Die Steuervorrichtung 4, insbesondere die Mikroprozessorsteuerung 23, ist über zumindest eine Leitung 30 mit dem Leistungsteil 3 verbunden. Damit ein schneller Datenaustausch zwischen dem Leistungsteil 3 und der Steuervorrichtung 4 durchgeführt werden kann, ist es möglich, daß die Leitung 30 durch einen Lichtleiter gebildet sein kann. Selbstverständlich ist es möglich, daß die Verbindung der Steuervorrichtung 4 und dem Leistungsteil 3 aus mehreren elektrischen Leitungen 30 oder Lichtleitern aufgebaut werden kann. Das Leistungsteil 3 kann beispielsweise durch eine primär getaktete Inverterstromquelle 31 oder aus jeder anderen zum Stand der Technik zählenden Stromquelle 2 gebildet werden. Damit das Leistungsteil 3 mit Energie, insbesondere mit Strom und Spannung, versorgt werden kann, ist dieses über Versorgungsleitungen 32, 33 mit einem Spannungsversorgungsnetz 34 verbunden. Selbstverständlich ist es möglich, daß anstelle des Spannungsversorgungsnetzes 34 jede andere Art von Energiequelle, wie beispielsweise eine Batterie, zur Speisung des Leistungsteils 3 verwendet werden kann.

Das Leistungsteil 3, insbesondere die Inverterstromquelle 31, hat die Aufgabe, die von dem öffentlichen Spannungsversorgungsnetz 34 gelieferte Energie in eine entsprechende Schweißenergie umzuwandeln, wie dies bereits aus dem Stand der Technik bekannt ist und daher auf die Funktion der Umwandlung der zugeführten Energie nicht näher eingegangen wird.

Damit ein Schweißprozeß über das Schweißgerät 1 durchgeführt werden kann, ist das Leistungsteil 3, insbesondere die Inverterstromquelle 31, über die Versorgungsleitungen 17, 18 mit dem Schweißbrenner 10 und dem Werkstück 16 verbunden.

Damit der Lichtbogen 15 zwischen dem Schweißdraht 13 und dem Werkstück 16 gezündet werden kann, ist es beispielsweise möglich, daß das Schweißgerät 1 einen Hochfrequenzgenerator 35 aufweist. Der Hochfrequenzgenerator 35 ist über Leitungen 36, 37 mit der Steuervorrichtung 4 und dem Ausgang des Leistungsteils 3, insbesondere mit der Versorgungsleitung 17 verbunden. Selbstverständlich ist es möglich, daß zum Zünden des Lichtbogens 15 jedes andere zum Stand der Technik zählende Verfahren, wie z.B. das Kontaktzünden, eingesetzt werden kann. Für die Zündung des Lichtbogens 15 wird von der Steuervorrichtung 4 ein Steuersignal an den Hochfrequenzgenerator 35 übergeben, wodurch anschließend ein Hochfrequenzsignal auf die Schweißenergie aufmoduliert wird, sodaß durch das Zuführen des Schweißdrahtes 13 zum Werkstück 16 bei einem bestimmten Abstand des Schweißdrahtes 13 zum Werkstück 16 eine einfache und automatische Zündung des Lichtbogens 15 erfolgt.

Damit der Schweißprozeß von der Steuervorrichtung 4 überwacht bzw. gesteuert werden kann, ist in der Versorgungsleitung 17 zum Schweißbrenner 10 oder in der Verbindungsleitung 18 zum Werkstück 16 eine Meßvorrichtung 38 angeordnet. Die Meßvorrichtung 38 kann dabei durch einen zum Stand der Technik zählenden Shunt 39 gebildet werden, sodaß der Stromfluß über die Versorgungsleitung 17 von der Meßvorrichtung 38 erfaßt werden kann. Dazu sind beidseits der Meßvorrichtung 38 Leitungen 40, 41 mit der Versorgungsleitung 17 verbunden, die anschließend mit einer Wandlervorrichtung 42 oder direkt mit der Steuervorrichtung 4 verbunden sind. Die Wandlervorrichtung 42 hat die Aufgabe, die von der Meßvorrichtung 38 gemessenen Werte, insbesondere den Strom und die Spannung, in ein digitales Signal umzuwandeln und anschließend über Leitungen 43, 44 an die Steuervorrichtung 4 bzw. an die Mikroprozessorsteuerung 23 weiterzuleiten, sodaß entsprechend den ermittelten Daten ein Steuervorgang von der Steuervorrichtung 4 durchgeführt werden kann. Damit auch die Spannung am Schweißbrenner 10 bzw. zwischen dem Schweißdraht 13 und dem Werkstück 16 ermittelt werden kann, ist eine weitere Leitung 45 zwischen der Wandlervorrichtung 42 und der Versorgungsleitung 18 angeordnet.

In Fig. 3 ist eine Oberfläche, insbesondere eine Frontplatte 46, der Ein- und/oder Ausgabevorrichtung 22 gezeigt. Die Ein- und/oder Ausgabevorrichtung 22 ist, wie bereits in Fig. 2 beschrieben, über diverse Leitungen 24, 25 mit der Steuervorrichtung 4 verbunden, sodaß über die Ein- und/oder Ausgabevorrichtung 22 die einzelnen Schweißparameter bzw. unterschiedliche Schweißprozesse eingestellt bzw. angezeigt werden können.

An der Frontplatte 46 ist es für den Benutzer möglich, über einzelne Einstellorgane 47 die unterschiedlichsten Schweißparameter bzw. Schweißprozesse auszuwählen, wobei diese über einen Hauptregler 48 vom Benutzer verändert werden können. Damit der Benutzer die ausgewählten Schweißparameter erkennen kann, weist die Ein- und/ oder Ausgabevorrichtung 22, insbesondere die Frontplatte 46, einzelne Anzeigeorgane 49 auf. Zusätzlich sind für die einzelnen Schweißparameter bzw. die unterschiedlichen Schweißprozesse Symbole 50 auf der Frontplatte 46 dargestellt.

Die Einstellorgane 47 können durch einzelne Taster bzw. durch einen Inkrementalgeber für den Hauptregler 48 gebildet werden. Hierzu ist es beispielsweise möglich, daß entsprechend dem dargestellten Ausführungsbeispiel die Einstellorgane 47 durch Folientaster bzw. durch ein Potentiometer für den Hauptregler 48 ausgebildet sein kann. Selbstverständlich ist es möglich, daß jedes beliebige aus dem Stand der Technik bekannte Einstellorgan 47 angewendet werden kann.

Die Anzeigeorgane 49 werden beispielsweise durch LED's oder LCD-Anzeigen gebildet. Selbstverständlich ist es wiederum möglich, daß jede beliebige andere Ausbildung von Anzeigeorganen 49 zum Anzeigen der Schweißparameter bzw. der hinterlegten Werte verwendet wird. Es ist auch möglich, daß anstelle von den einzelnen Einstellorganen 47 und den Anzeigeorganen 49 ein Touchscreen eingesetzt wird, sodaß durch Berühren des Bildschirms die entsprechenden Schweißparameter ausgewählt und angezeigt werden können.

Ein Benutzer hat nunmehr die Möglichkeit, daß er über die Einstellorgane 47 an der Frontplatte 46 die unterschiedlichsten Schweißparameter, wie beispielsweise einen Schweißstrom 51, eine Übertemperatur 52, eine Materialstärke 53 für das Werkstück 16, eine Drahtvorschubgeschwindigkeit 54, eine Schweißspannung 55, eine Lichtbogenlänge 56 und einen Stromanstieg 57 auswählen, anzeigen oder einstellen kann. Zusätzlich ist es möglich, daß der Benutzer weitere Schweißparameter, wie den Drahtdurchmesser 58, die Gasmischung 59 sowie unterschiedliche Schweißprozesse 60 und Zusatzfunktionen 61 einstellen kann. Es ist auch möglich, daß das Schweißgerät 1 über eine übergeordnete Steuervorrichtung, wie beispielsweise einem Computer, einer SPS, einem externen Bedienelement, usw., eingestellt bzw. die Einstellung angezeigt werden kann. Hierzu wird die übergeordnete Steuerung über eine standardisierte Schnittstelle mit dem Schweißgerät 1 verbunden, sodaß ein direkter Datentransfer durchgeführt werden kann.

Auf den Funktionsablauf für die Auswahl und Anzeige der einzelnen Schweißparameter durch die Einstellorgane 47 und Anzeigeorgane 49 wird nicht näher eingegangen, da jedes beliebige aus dem Stand der Technik bekannte Verfahren zum Einstellen, Auswählen oder Anzeigen von Parametern, insbesondere von Schweißparametern, eingesetzt werden kann. Es wird nur kurz darauf hingewiesen, daß zu den einzelnen Schweißparametern in der Speichervorrichtung 29 Standardwerte bzw. Soll-Werte hinterlegt sind, sodaß bei Auswahl eines entsprechenden Schweißparameters dieser Standardwert bzw. Soll-Wert aus der Speichervorrichtung 29 geladen wird und anschließend durch Ansteuern der Ein- und/oder Ausgabevorrichtung 22 von der Steuervorrichtung 4 diese über die Anzeigeorgane 49 an der Frontplatte 46 angezeigt werden. Der Benutzer hat anschließend die Möglichkeit, über den Hauptregler 48 den angezeigten Standardwert bzw. Soll-Wert zu verändern, sodaß entsprechend den Einstellungen des Benutzers ein Schweißprozeß von der Steuervorrichtung 4 errechnet wird und vom Benutzer durchgeführt werden kann.

Weiters ist es möglich, daß an der Frontplatte 46 ein Anzeigeorgan 49 in Form eines Speicherelementes 62, welches durch das Symbol 50 "F1-F4" dargestellt ist, angeordnet sein kann. Das Anzeigeorgan 49 für das Speicherelement 62 ist beispielsweise in Form einer Leuchtdiode ausgebildet, sodaß bei Auswahl dieses Symbols 50 das Anzeigeorgan 49 zu leuchten beginnt und somit der Benutzer erkennen kann, daß diese Funktion ausgewählt wurde. Der Benutzer hat durch die Verwendung eines derartigen Speicherelementes 62 die Möglichkeit, daß er zusätzliche Schweißparameter, die nicht an der Frontplatte 46 angeführt sind, einem dieser Speicherelemente 62 zuordnen kann, sodaß er bei einer neuerlichen Inbetriebnahme des Schweißgerätes 1 ohne großen Aufwand, nur durch Auswahl des entsprechenden Speicherelementes 62, wiederum diesen Schweißparameter zur Verfügung hat. Die Speicherung der zugeordneten Daten bzw. der Zuordnung des Schweißparameters erfolgt in der Speichervorrichtung 29. Hierzu ist eine Speichertaste 63 an der Frontplatte 46 angeordnet.

Der Benutzer hat weiters die Möglichkeit, daß sämtliche nicht an der Frontplatte 46 dargestellte Schweißparameter durch entsprechende Betätigung der Einstellorgane 47 bei Auswahl eines Speicherelementes 62 ausgewählt werden können, sodaß auch jene Schweißparameter verändert werden können, die nicht an der Frontplatte 46 dargestellt sind. Es ist auch möglich, daß der Benutzer einzelne Prozeßschritte bzw. Verfahrensabläufe den Speicherelementen 62 zuordnen kann, d.h. daß der Benutzer einen Prozeßablauf bzw. Verfahrensablauf, wie beispielsweise das Einfädeln des Schweißdrahtes 13, einem Speicherelement 62 zuordnen kann, sodaß der Benutzer jederzeit die Möglichkeit hat, diesen Prozeßablauf bzw. Verfahrensablauf über dieses Speicherelement 62 zu aktivieren.

Erfindungsgemäß ist nunmehr vorgesehen, daß ein zusätzlicher Schweißparameter in das Schweißgerät 1, insbesondere in die Ein- und/oder Ausgabevorrichtung 22 bzw. in die Steuervorrichtung 4, mitaufgenommen wird. Bei dem zusätzlichen Schweißparameter handelt es sich um die Angabe bzw. die Einstellmöglichkeit einer Schweißnaht, insbesondere um die Flächenangabe bzw. Querschnittsangabe einer Schweißnaht, nämlich um das a-Maß 64, und einer Schweißgeschwindigkeit 65, welche durch ein Anzeigeorgan 66 in Form einer Leuchtdiode und als Symbol 50 an der Frontplatte 46 dargestellt sind. Der Benutzer hat damit die Möglichkeit, eine Einstellung der Fläche bzw. des Querschnittes für ein Schweißverfahren bzw. einen Schweißprozeß zur Bildung aller einlagigen oder mehrlagigen Schweißnahtformen vorzunehmen.

Der Schweißparameter bzw. die Schweißangabe des a-Maßes 64 ist bereits aus dem Stand der Technik bekannt, wobei dieses jedoch noch nicht in einem Schweißprozeß eingebunden wird, sondern der Benutzer derzeit nur aus den Schweißplänen bzw. Schweißzeichnungen diesen Schweißparameter entnehmen bzw. berechnen kann und anschließend nach seinen Erfahrungswerten die Einstellung des Schweißgerätes 1 zur Bildung einer entsprechenden Schweißnaht vornimmt.

Das a-Maß 64 dient hauptsächlich für Maßangaben, insbesondere für den Schweißnahtquerschnitt, von Schweißnähten, insbesondere von Kehlnähten, die den überwiegenden Teil von Schweißungen bzw. Schweißprozessen ausmachen. Die Bemaßung von Schweißnähten kann mit mehreren verschiedenen Parametern bzw. Angaben oder Maßen erfolgen. Die Nahtdicke, die Nahtbreite oder die Schenkellänge von Schweißnähten, insbesondere von Kehlnähten, geben dem Benutzer Auskunft. In der schweißtechnischen Zeichnung ist das "Nahtdickenmaß a", das "Nahtbreitenmaß b" oder das "Schenkelmaß z" angegeben. Das Einstellen von abgeleiteten Längen-, Flächen-, oder Volumenangaben erfolgt durch das a-Maß 64, das z-Maß oder das b-Maß. Dies kann für die Bildung einer Fläche einer Schweißnaht für ein Schweißverfahren bzw. für einen Schweißprozeß bei allen einlagigen oder mehrlagigen Schweißnahtformen eingesetzt werden. Damit der Benutzer auf die unterschiedlichen Parameter zugreifen kann, kann der Benutzer am Schweißgerät 1 den Schweißparameter des a-Maßes 64 auswählen, sodaß anschließend durch Betätigung eines Einstellorgans 47 ein taktweises bzw. schrittweises Weiterschalten auf die unterschiedlichen Parameter, nämlich das a-Maß, das b-Maß und das z-Maß, für die Bemaßung der Schweißnaht durchgeführt werden kann. Zur Berechnung einzelner unbekannter Komponenten bzw. unbekannter Angaben können die aus dem Stand der Technik bekannten Formeln

$$z = a \cdot \sqrt{2} \qquad b = \sqrt{2} \cdot z$$

die in der Speichervorrichtung 29 hinterlegt sind und von der Steuervorrichtung 4 zur Berechnung herangezogen werden, verwendet werden.

Aus dem Stand der Technik ist derzeit bekannt, daß die Einstellung des Schweißgerätes 1 vom Benutzer selbst durchgeführt wird, sodaß für die Bildung einer Kehlnaht, wie sie beispielsweise aus einer schweißtechnischen Zeichnung zu entnehmen ist, vom Benutzer viel Erfahrung bzw. unzählige Schulungen zur Erreichung einer richtigen Einstellung des Schweißgerätes 1 benötigt werden. Der Benutzer hat jedoch aufgrund der vorgegebenen Parameter bzw. Maßangaben nunmehr die Möglichkeit, durch Eingabe der vorgegebenen Parameter über das Schweißgerät 1 eine selbständige Berechnung sowie Einstellung der einzelnen Schweißparameter durchführen zu lassen, da sämtliche für die Berechnung einer Schweißnaht benötigten Formeln in der Speichervorrichtung 29 oder Steuervorrichtung 4 hinterlegt sind.

Dazu ist es möglich, daß die nachstehend angeführte Gleichung zur Berechnung der einzelnen Schweißparameter verwendet werden kann, wobei für die einzelnen Schweißparameter folgende Abkürzungen eingesetzt werden: Schweißnahtquerschnitt "A" in mm$^2$, Schweißgeschwindigkeit "$v_{sch}$" in cm/min, Querschnitt des Zusatzmaterials "Az" in mm$^2$, Drahtvorschub "$v_{draht}$" m/min.

$$\text{Die Gleichung lautet daher:} \qquad A * v_{sch} = Az * v_{draht}$$

Daraus kann nunmehr die Steuervorrichtung 4 durch Umwandlung und Ableitung der Gleichung die Schweißgeschwindigkeit 65 und die Fläche der Schweißnaht bzw. den Schweißnahtquerschnitt, insbesondere das a-Maß 64, ermitteln:

Schweißnahtquerschnitt: $\qquad A = a^2$

Querschnitt des Zusatzmaterials: $\qquad Az = (d^2 * \pi) / 4$

a-Maß 64:

$$a = \sqrt{\frac{\left(d^2 * \pi * v_{draht} * 100\right)}{\left(4 * v_{sch}\right)}}$$

Schweißgeschwindigkeit 65: $\qquad v_{sch} = ( d^2 * \pi \times v_{draht} * 100 ) / ( 4 * a^2 )$

Weiters ist der Winkel "w" der beiden zu verschweißenden Werkstücke 16 zueinander ausschlaggebend, um die benötigten bzw. vorgegebenen Abmessungen der Schweißnaht zu erreichen. Ist dem Benutzer der Winkel der beiden zu verschweißenden Werkstücke 16 bekannt, so kann er durch die aus dem Stand der Technik bekannte Formel

$$A = \tan ( w / 2 ) * a^2$$

die Fläche der Schweißnaht in bezug auf das a-Maß 64, mit dem Kürzel "a", berechnen.

Selbstverständlich ist es möglich, daß auch für die weiteren Schweißparamter Maßbezeichnungen von Schweißnähten, wie dem Nahtbreitenmaß b und dem Schenkelmaß z, eine Berechnung aus den zum Stand der Technik zählenden Formeln erfolgen kann. Hierzu ist es beispielsweise möglich, daß zur Berechnung oder ausgehend von der Schenkellänge, also des z-Maßes mit dem Kürzel "z", die nachstehende Formel verwendet werden kann.

$$A = [\sin ( \text{w der Werkstücke} * z^2 )] / 2$$

Wird beispielsweise von einem Benutzer ein MIG/MAG-Schweißprozeß zur Bildung einer Schweißnaht, insbesondere einer Kehlnaht, ausgewählt bzw. durchgeführt, so wird bei den aus dem Stand der Technik bekannten Schweißgeräten 1 die Geräteeinstellung aufgrund von Erfahrungswerten des Schweißers bzw. des Benutzers vorgenommen, d. h., daß der Schweißer bzw. der Benutzer den Drahtvorschub, die Schweißspannung und den Schweißstrom aus Erfahrungswerten zum Erreichen der errechneten bzw. ermittelten Fläche der Schweißnaht am Schweißgerät 1 einstellt und anschließend entsprechend seiner Erfahrung den Schweißprozeß mit einer entsprechenden Schweißgeschwindigkeit durchführt. Bei einer derartigen Einstellung des Schweißgerätes 1 und bei einer Durchführung des Schweißprozesses mit einer selbst eingeschätzten Schweißgeschwindigkeit ist nicht sichergestellt, daß der Schweißer bzw. der Benutzer auch eine entsprechend der berechneten Fläche bzw. Querschnittes ausgebildete Schweißnaht erreicht, wodurch fehlerhafte Schweißnähte entstehen können. Durch derartig fehlerhafte Schweißnähte kann es nämlich passieren, daß bei entsprechenden Konstruktionen die Schweißnähte den Belastungen nicht standhalten, sodaß es zum Bruch der beiden verschweißten Teile kommen kann.

Modernere Schweißstromquellen bieten dem Schweißer bzw. dem Benutzer durch vorprogrammierte Schweißkennlinien, die in der Speichervorrichtung 29 hinterlegt sind, bereits vor der Schweißung Richtwerte an. Hierzu kann der Schweißer bzw. der Benutzer durch Auswahl dieser Schweißkennlinien die einzelnen Schweißparameter, wie den Schweißstrom, die Schweißspannung, die Materialdickenrichtwerte, den Drahtvorschubsollwert, ablesen bzw. verändern und übernehmen, sodaß ein entsprechender Schweißprozeß, laut den hinterlegten Schweißkennlinien, durchgeführt werden kann. Die spezielle Einstellung bzw. die Anpassung der vorgegebenen Schweißparameter wurde dadurch für den Benutzer erleichtert, wobei jedoch die Angaben über die zu erwartenden Nahtdicken bzw. die Fläche oder der Querschnitt der Schweißnaht aus dem Schweißplan bzw. der Schweißanweisung zu entnehmen oder die Schweißgeschwindigkeit der Erfahrung des Schweißers bzw. des Benutzers überlassen waren.

Damit ein Schweißer bzw. ein Benutzer eine annähernd vorgegebene Schweißnaht, insbesondere eine Kehlnaht, erstellen konnte, mußte dieser vor der tatsächlichen Schweißung einige Probeschweißungen zur Findung der richtigen Geräteeinstellung bzw. der Schweißgeschwindigkeit durchführen, was einen hohen Zeit- und Materialaufwand bewirkte. Es bestand dabei jedoch immer noch die Gefahr, daß Fehlschweißungen in Form von Kaltstellen oder infolge zu großer Wärmeeinbringung durch die falsche Wahl eines Schweißparameters entstehen konnten.

Der Schweißer bzw. der Benutzer hat nunmehr die Möglichkeit die unterschiedlichen Parameter, z.B. das a-Maß 64, über die Ein- und/oder Ausgabevorrichtung 22 einzustellen, worauf die Steuervorrichtung 4 durch die bereits aus dem Stand der Technik bekannten Formeln die unterschiedlich fehlenden Komponenten bzw. Schweißparameter berechnet und an der Ein- und/oder Ausgabevorrichtung 22 dem Schweißer bzw. dem Benutzer anzeigt. Hierzu kann der Benutzer die beiden Anzeigeorgane 66 bzw. die Schweißparameter des a-Maßes 64 und der Schweißgeschwindigkeit 65 aktivieren, wodurch eine Eingabe für die Berechnung durch die bekannten Formeln durchgeführt werden kann. Die Berechnungsgrundlage kann von unterschiedlichen Schweißparametern, wie beispielsweise dem Nahtdikkenmaß a, dem Nahtbreitenmaß b, dem Schenkelmaß z ausgehen, d. h., daß durch Auswahl des Anzeigeorganes 66, insbesondere des a-Maßes 64, der Schweißer zumindest einen Parameter bzw. Wert zu einem der unterschiedlichen Schweißparameter eingeben kann, worauf die Steuervorrichtung 4 die Berechnung des Schweißprozesses vornimmt. Hierzu ist es möglich, daß bei einer fehlenden Angabe bzw. einem fehlenden Parameter durch Umwandlung der Formeln die Steuervorrichtung 4 die fehlenden Angaben bzw. Parameter errechnet, sodaß der Schweißer anschließend diesen Wert durch Aktivieren des Schweißparameters des a-Maßes 64 ablesen kann.

Damit ein entsprechender Schweißprozeß mit der Einstellung des a-Maßes 64 vom Schweißer bzw. Benutzer durchgeführt werden kann, ist es möglich, daß in der Speichervorrichtung 29 entsprechende Soll-Werte hinterlegt sind, d.h., daß für die unterschiedlichen Parameter einer Schweißnahtfläche bzw. eines Schweißnahtquerschnittes für eine Schweißnaht, insbesondere für eine Kehlnaht, unterschiedliche Soll-Werte hinterlegt sind, sodaß der Benutzer durch Auswahl eines entsprechenden Parameters, insbesondere der Fläche des a-Maßes 64, diese Soll-Werte von der Speichervorrichtung 29 in den Hauptspeicher der Steuervorrichtung 4 geladen und über die Ein- und/oder Ausgabevorrichtung 22 angezeigt werden. Der Benutzer hat anschließend die Möglichkeit, über den Hauptregler 48 die entsprechenden Soll-Werte des a-Maßes 64 zu verändern. Führt ein Benutzer eine Veränderung eines Soll-Wertes durch, so wird von der Steuervorrichtung 4 eine neue Berechnung des a-Maßes 64, insbesondere der einzelnen Parameter, wie beispielsweise der Schweißstrom, der Drahtvorschub, die Schweißgeschwindigkeit 65, für eine Schweißnaht durchgeführt, worauf anschließend die einzelnen Werte taktweise an der Ein- und/oder Ausgabevorrichtung 22 angezeigt werden.

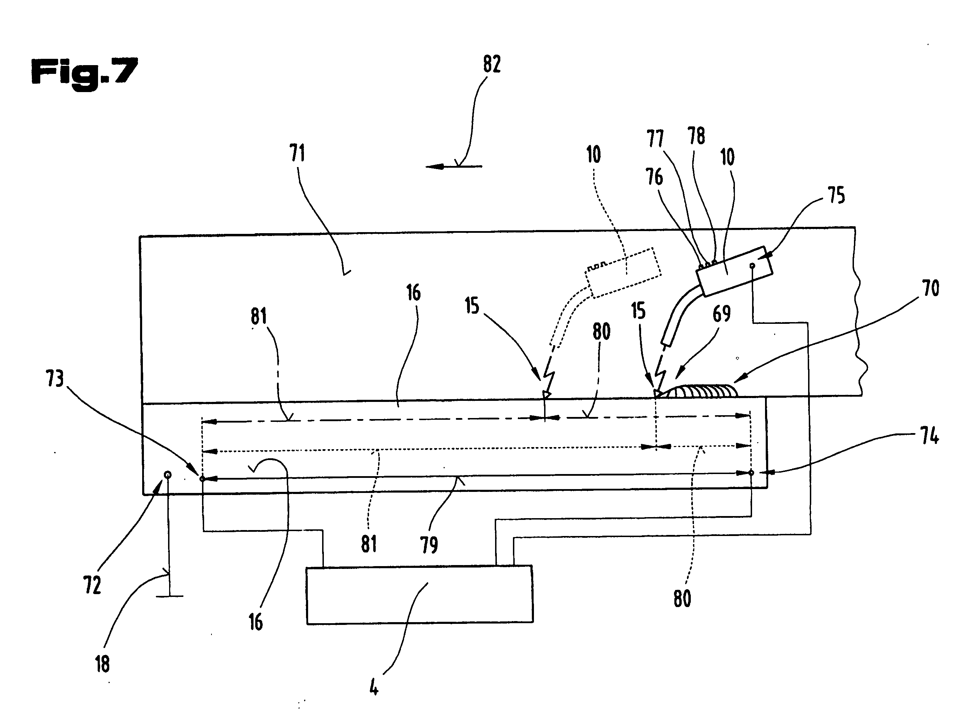

Da für einen Schweißprozeß, insbesondere mit der Einstellung des a-Maßes 64, der Schweißparamter für die Schweißgeschwindigkeit 65 maßgebend ist, ist es beispielsweise möglich, daß der Schweißparameter der Schweißgeschwindigkeit 65 an der Ein- und/oder Ausgabevorrichtung 22 oder einer übergeordneten Steuervorrichtung, wie beispielsweise einem Computer, einer SPS, usw., angezeigt und verändert werden kann, wobei eine Überwachung der Schweißgeschwindigkeit 65 für den Schweißbrenner 10 von der Steuervorrichtung 4 oder einer Geschwindigkeitsüberwachungsvorrichtung durchgeführt wird, d.h., daß bei einem Schweißprozeß die Schweißgeschwindigkeit 65 von dem Schweißgerät 1, insbesondere von der Steuervorrichtung 4, erfaßt wird, sodaß anschließend über entsprechende Anzeigemittel der Benutzer darauf aufmerksam gemacht wird, daß eine zu hohe oder zu niedrige Schweißgeschwindigkeit vorliegt, wodurch eine Anpassung der Schweißgeschwindigkeit 65 erfolgen kann und somit eine vorgegebene Schweißnaht, insbesondere eine Kehlnaht, vom Benutzer erstellt werden kann. Eine derartige Ausbildung für die Überwachung der Schweißgeschwindigkeit 65 des Schweißbrenners 10 wird anschließend in Fig. 7 näher erläutert.

Selbstverständlich ist es möglich, daß bei Verwendung des Schweißgerätes 1, insbesondere des Schweißbrenners 10, für einen Schweißroboter die Einstellung der Schweißgeschwindigkeit 65 direkt über eine Schnittstelle vom Schweißgerät 1, insbesondere von der Steuervorrichtung 4, an dem Schweißroboter vorgenommen werden kann und somit auch während eines Schweißprozesses ein Datenaustausch über die Schnittstelle zur Anpassung der Schweißgeschwindigkeit 65 zwischen dem Schweißroboter und der Steuervorrichtung 4 durchgeführt werden kann. Hierzu ist es möglich, daß bei zu hoher Schweißgeschwindigkeit 65 bzw. zu niedriger Schweißgeschwindigkeit 65 von der Steuervorrichtung 4 ein Signal bzw. ein entsprechender Datensatz an den Schweißroboter über die Schnittstelle abgesandt wird, wodurch der Schweißroboter entsprechend den Vorgaben des Schweißgerätes 1 die Schweißgeschwindigkeit 65 erhöht bzw. erniedrigt. Selbstverständlich ist es möglich, daß die Schweißgeschwindigkeit 65 vom Schweißroboter über die Schnittstelle dem Schweißgerät 1 bzw. der Steuervorrichtung 4 vorgegeben werden kann, sodaß bei Änderung der Schweißgeschwindigkeit 65 die Steuervorrichtung 4 eine Anpassung der restlichen Schweißparameter, wie beispielsweise des Drahtvorschubes usw., an die neue Schweißgeschwindigkeit 65 durchführt. Der Benutzer hat dabei die Möglichkeit, daß er über eine Sonderfunktion in Form eines Schweißparameters eine entsprechende Einstellung am Schweißgerät 1 bzw. an der Ein- und/oder Ausgabevorrichtung 22 für den Datenaustausch mit einer externen Komponente vornehmen kann. Dabei kann der Benutzer festlegen, ob von der externen Komponente oder von der Steuervorrichtung 4 einzelne Parameter, z.B. die Schweißgeschwindigkeit 65, vorgegeben wird, wodurch beispielsweise ein direkter Datenaustausch zwischen dem Schweißroboter und der Steuervorrichtung 4 vorgenommen werden kann.

Hierzu ist es beispielsweise möglich, daß der Benutzer bei Auswahl des Schweißparameters der Schweißgeschwindigkeit 65 durch Betätigung eines Einstellorganes 47 auf diese Sonderfunktion bzw. diesen Schweißparameter zugreifen kann und damit eine entsprechende Einstellung für einen Datenaustausch bzw. Datentransfer mit einem externen Gerät bzw. einer Anlage, wie einen Schweißroboter, vornehmen kann. Dabei kann der Benutzer noch weitere für den Datentransfer notwendige Einstellungen bzw. Parameter, wie der Baudrate usw., vornehmen.

Hat der Benutzer diese Sonderfunktion ausgewählt, so ist es möglich, daß von der Steuervorrichtung 4 zuerst eine weitere Sonderfunktion, die an der Ein- und/oder Ausgabevorrichtung 22 angezeigt wird, aufgerufen wird, über die der Benutzer einstellen kann, ob ein Schweißprozeß mit einem Handschweißbrenner oder einem Roboterschweißbrenner durchgeführt wird. Dies ist insofern von Vorteil, da in der Speichervorrichtung 29 für die beiden unterschiedlichen Schweißarten verschiedene Soll-Werte hinterlegt sind und somit die Steuervorrichtung 4 die für die gewählte Schweißart entsprechenden Soll-Werte in den Hauptspeicher laden kann bzw. auf die entsprechenden Soll-Werte zugreifen kann.

Durch die Unterscheidung der Schweißarten bezüglich einer manuellen, halbautomatisierten oder automatisierten Schweißung, wie beispielsweise einer Handschweißung oder einer Roboterschweißung, wird erreicht, daß für die Berechnung der einzelnen Schweißparameter und für die Überwachung der Schweißparameter die Steuervorrichtung 4 unterschiedliche Aufgaben durchführen bzw. ausführen muß, d.h., daß beispielsweise bei einer Roboterschweißung eine exaktere Vorgabe bzw. Regelung der Schweißgeschwindigkeit 65 möglich ist, wobei bei einer Handschweißung meist nur Richtwerte in bezug auf die Schweißgeschwindigkeit 65 vorgegeben werden, da der Benutzer bzw. der Schweißer meist nicht in der Lage ist, die vorgegebene Schweißgeschwindigkeit 65 exakt beizubehalten und somit von der Steuervorrichtung 4 eine ständige Anpassung der weiteren Schweißparameter durchgeführt wird. Ein weiterer Unterschied der beiden Schweißarten liegt darin, daß bei einer Roboterschweißung die Schweißgeschwindigkeit 65 wesentlich erhöht werden kann und somit andere Grenzwerte zur Durchführung eines Schweißprozesses festgelegt werden können.

Durch die Unterscheidung der beiden Schweißarten kann die Steuervorrichtung 4 für die Berechnung des Schweißprozesses bei Auswahl einer Handschweißung benutzerspezifische Daten bzw. gespeicherte Einstellungen heranziehen. Dabei ist es beispielsweise möglich, daß der Benutzer bei einer Probeschweißung seine angewohnte Schweißgeschwindigkeit 65 ermittelt und diese durch Eingabe über die Ein- und/oder Ausgabevorrichtung 22 in der Speichervorrichtung 29 speichert, sodaß die Steuervorrichtung 4 bei der Berechnung die restlichen Schweißparameter an diese Schweißgeschwindigkeiten 65 anpaßt, wodurch der Benutzer seine angewohnten Eigenschaften nicht verändern muß. Durch ein derartiges Vorgehen wird annähernd sichergestellt, daß der Benutzer eine entsprechend vorgegebene Schweißnaht herstellen kann.

Für eine Überwachung der Schweißgeschwindigkeit 65 des Schweißbrenners 10 bei der Verwendung für einen Schweißroboter oder einer Handschweißung ist es selbstverständlich möglich, daß jedes beliebige aus dem Stand der Technik bekannte Verfahren zur Überwachung der Schweißgeschwindigkeit 65 eines Schweißbrenners 10 eingesetzt werden kann. Diese Verfahren oder Vorrichtungen bzw. Anlagen müssen nicht im Schweißgerät 1 integriert sein, wobei es möglich ist, daß die Vorrichtungen bzw. Anlagen über eine Schnittstelle mit dem Schweißgerät 1, insbesondere mit der Steuervorrichtung 4, verbunden sind. Selbstverständlich ist es möglich, daß diese Anlagen bzw. Vorrichtung für die Verfahren zum Messen der Schweißgeschwindigkeit 65 des Schweißbrenners 10 in dem Schweißgerät 1 integriert sein können bzw. bei einer entsprechenden Softwaresteuerung diese über die Steuervorrichtung 4 durchgeführt wird.

Der Benutzer hat nun die Möglichkeit, daß bei vorgegebener Nahtdicke oder Schenkellänge, wie sie aus den Schweißplänen oder aus einer Schweißanweisung zu entnehmen sind, die einzelnen für die Berechnung des a-Maßes 64 benötigten Parameter an der Ein- und/oder Ausgabevorrichtung 22 einstellen kann. Hierzu wählt der Benutzer bzw. der Schweißer das Anzeigeorgan 66 für das a-Maß 64 aus, sodaß anschließend der Benutzer zumindest einen der Parameter, wie das Nahtdickenmaß a, das Nahtbreitenmaß b und das Schenkelmaß z, eingeben kann.

Hierzu werden entsprechende in der Speichervorrichtung 29 hinterlegte Soll-Werte von der Steuervorrichtung 4 ausgelesen und anschließend an der Ein- und/oder Ausgabevorrichtung 22 angezeigt, die jedoch über den Hauptregler 48 vom Benutzer verändert werden kann. Damit ein taktweises Weiterspringen auf den nächsten Parameter durchgeführt werden kann, kann der Benutzer durch Betätigen eines Einstellorganes 47 eine Weiterschaltung auf den nächsten Parameter vornehmen. Zusätzlich werden für die Berechnung des a-Maßes 64 die weiteren Einstellungen, wie beispielsweise das Zusatzmaterial, der Drahttyp, der Durchmesser des Zusatzmaterials, das eingesetzte Gas, usw., zur Berechnung von der Steuervorrichtung 4 herangezogen.

Nachdem der Benutzer sämtliche Schweißparameter am Schweißgerät 1, insbesondere an der Ein- und/oder Ausgabevorrichtung 22, eingestellt hat, erfolgt von der Steuervorrichtung 4 die Berechnung der einzelnen vom Benutzer nicht eingegebenen oder unbekannten Parameter, worauf der Benutzer anschließend durch taktweises Anzeigen der einzelnen Parameter an der Ein- und/oder Ausgabevorrichtung 22 die berechneten Werte ablesen kann.

Falls es notwendig ist, kann der Benutzer bzw. der Schweißer eine Korrektur der Lichtbogenlänge und/oder der Schweißgeschwindigkeit 65 sowie der Lichtbogendynamik vornehmen, d.h., daß durch das taktweise Anzeigen der Benutzer die Möglichkeit hat, durch Betätigen eines Einstellorganes das taktweise Anzeigen der einzelnen Schweißparameter zu unterbrechen, worauf über den Hauptregler 48 der Benutzer noch eventuelle Korrekturen vornehmen kann. Betätigt der Benutzer wiederum ein Einstellorgan 47, so erfolgt eine Weiterschaltung auf den nächsten Schweißparameter.

Weiters ist es beispielsweise möglich, daß für die Einstellung des a-Maßes 64 das Anzeigeorgan 66 ausgewählt werden kann, worauf nach Abschluß der einzelnen Eingaben der Parameter der Benutzer das Anzeigeorgan 66 der Schweißgeschwindigkeit 65 auswählt, sodaß eine Anzeige des errechneten Wertes an der Ein- und/oder Ausgabevorrichtung 22 durchgeführt wird. Bei einem Schweißprozeß kann die Überwachung der Schweißgeschwindigkeit 65 automatisch von dem Schweißgerät 1, insbesondere von der Steuervorrichtung 4, wie es bei dem Ausführungsbeispiel in Fig. 7 beschrieben ist, erfolgen. Selbstverständlich ist es möglich, daß die Überwachung der Schweißgeschwindigkeit durch eine übergeordnete und/oder untergeordnete externe Steuervorrichtung, wie z.B. eine SPS, durchgeführt werden kann.

Weiters ist es nämlich möglich, daß bei Auswahl der Anzeigeorgane 66 sich der Benutzer vorab die einzelnen berechneten Soll-Werte über die Ein- und/oder Ausgabevorrichtung 22 anschauen kann, sodaß anschließend durch Betätigung eines Einstellorgans 47 der Benutzer eine Änderung der hinterlegten Soll-Werte vornehmen kann. Selbstverständlich ist es auch möglich, daß in der Speichervorrichtung 29 unterschiedliche Soll-Werte für die unterschiedlichen Schweißprozesse hinterlegt sind, d.h., daß für eine Handschweißung andere Soll-Werte als für eine Roboterschweißung hinterlegt sind, wobei durch Auswahl des Parameters für die Handschweißung jene Parameter, die für die Handschweißung hinterlegt sind, angezeigt werden.

Durch die unterschiedlich hinterlegten Soll-Werte für eine Handschweißung und eine Roboterschweißung wird erreicht, daß die Überwachung des Schweißprozesses, insbesondere in bezug auf die Schweißgeschwindigkeit 65, erleichtert wird, da ein direkter Datenaustausch bzw. eine direkte Steuerung mit einem Schweißroboter durchgeführt werden kann, wodurch eine exakte Prozeßsteuerung möglich ist, d.h., daß durch Verbinden des Schweißgerätes 1, insbesondere der Steuervorrichtung 4, über eine Schnittstelle mit der Steuervorrichtung des Schweißroboters ein direkter Einfluß auf den Steuervorgang des Schweißroboters vorgenommen werden kann und somit eine exakte Steuerung bzw. Prozeßführung für eine Kehlnaht möglich ist. Selbstverständlich ist es möglich, daß die Steuerung des Schweißroboters in die Steuerung des Schweißgerätes 1 eingreifen kann.

Der Vorteil durch die Aufnahme des a-Maßes 64 in das Schweißprogramm eines Schweißgerätes 1 bzw. einer Steuervorrichtung 4 liegt nun darin, daß der Benutzer bzw. der Schweißer bei der Einstellung des Schweißgerätes 1 zur Durchführung einer Schweißnaht, insbesondere einer Kehlnaht, von der Steuervorrichtung 4 unterstützt wird, wodurch Fehleingaben für Schweißungen verhindert werden. Weiters ist es durch die Mitaufnahme des a-Maßes 64 möglich, daß ein nicht trainiertes Fachpersonal ohne aufwendige Probeschweißungen eine entsprechend den Schweißzeichnungen vorgegebene Kehlnaht erstellen kann und somit wiederum Fehlschweißungen bzw. eine Schweißraupe mit zu geringer Fläche verhindert wird.

Weiters ist es möglich, daß durch Abspeichern voreingestellter Werte eine Anpassung an die persönlichen Eigenschaften eines Benutzer Rücksicht genommen werden kann, wie dies beispielsweise bei dem Schweißparameter der Schweißgeschwindigkeit 65 der Fall ist, sodaß der Benutzer beim Durchführen des Schweißprozesses diesen mit einer Schweißgeschwindigkeit 65, die er sich im Laufe der Jahre angewöhnt hat, durchführen kann. Hierzu wird durch die Einstellung des a-Maßes 64 nunmehr erreicht, daß entsprechend der eingegebenen bzw. angewohnten Schweißgeschwindigkeit 65 des Benutzers die weiteren Parameter für eine vorgegebene Kehlnaht angepaßt werden können. Selbstverständlich ist es möglich, daß der Benutzer eine Probeschweißung durchführen kann, sodaß die angewohnte Schweißgeschwindigkeit 65 vom Benutzer ermittelt wird und anschließend in der Speichervorrichtung 29 hinterlegt werden kann, wodurch bei Auswahl der weiteren Parameter für das a-Maß 64 die persönliche Schweißgeschwindigkeit 65 des Benutzers für die Berechnung einer vorgegebenen Kehlnaht herangezogen wird und somit die Anpassung der unterschiedlichen Einstellungen, wie der Drahtvorschubgeschwindigkeit, der Lichtbogenlänge, usw. ermittelt wird. Selbstverständlich ist es möglich, daß mehrere persönliche Daten für einen oder mehrere Benutzer hinterlegt werden, sodaß durch Auswahl einer entsprechenden Schweißgeschwindigkeit 65 wiederum eine Anpassung an die unterschiedlichsten Benutzer von der Steuervorrichtung 4 durchgeführt wird.

Durch die Verwendung des Schweißparameters des a-Maßes 64 wird weiters erreicht, daß eine leichte Parameterfindung bei automatisierten Schweißungen, insbesondere bei Roboterschweißungen, erzielt wird, da durch die Auswahl der einzelnen Schweißparameter und durch das automatische Berechnen der Benutzer keine entsprechenden Probeschweißungen mit dem Schweißroboter durchführen muß. Hierzu ergibt sich der große Vorteil, daß der Schweißroboter an die berechnete Schweißgeschwindigkeit 65 leicht angepaßt werden kann, ohne daß dabei eine Überwachung der Schweißgeschwindigkeit 65, insbesondere des Schweißbrenners 10, durchgeführt werden muß.

Führt der Benutzer einen Schweißprozeß mit den neu eingeführten Sonderfunktionen, insbesondere dem neu eingefügten Schweißparameter des a-Maßes 64, durch, so werden von der Steuervorrichtung 4 zuerst die einzelnen Schweißparamter, wie beispielsweise der Schweißstrom, der Drahtvorschub, die Schweißspannung, die Schweißgeschwindigkeit 65, usw., berechnet, sodaß eine automatische bzw. selbständige Einstellung des Schweißgerätes 1 durch Vorgabe der Schweißparameter von der Steuervorrichtung 4 durchgeführt wird. Der Benutzer muß bzw. kann jedoch zur Berechnung des Schweißprozesses einige Schweißparamter, wie beispielsweise den Schweißstrom, die Fläche bzw. den Querschnitt der Schweißnaht, insbesondere das a-Maß 64, vorgeben. Werden jedoch vom Benutzer keine bzw. zu wenige Schweißparamter vorgegeben, so werden von der Steuervorrichtung 4 die in der Speichervorrichtung 29 hinterlegten Soll-Werte für die Berechnung herangezogen, d.h., daß in der Speichervorrichtung 29 für unterschiedliche Schweißnahtquerschnitte, also der Fläche der Schweißnaht, nämlich das a-Maß 64, die zur Bildung einer derartigen Schweißnaht benötigten Soll-Werte der Schweißparameter hinterlegt sind. Diese Soll-Werte können vom Hersteller des Schweißgerätes 1 vorgegeben sein bzw. ist es möglich, daß der Benutzer bei der Inbetriebnahme des Schweißgerätes 1 zuerst derartige Soll-Werte hinterlegt.

Der Benutzer hat somit die Möglichkeit, daß er durch einfaches Auswählen eines Schweißnahtquerschnittes, insbesondere eines Soll-Wertes des a-Maßes 64, einen Schweißprozeß durchführen kann, ohne daß dabei ein entsprechendes Fachwissen für die Einstellung des Schweißgerätes 1 zur Bildung einer vorgegebenen Schweißnaht notwendig ist. Werden jedoch vom Benutzer einige Schweißparameter, wie beispielsweise der Schweißstrom, die Schweißgeschwindigkeit 65, usw., vorgegeben, so wird von der Steuervorrichtung 4 eine neue Berechnung für den Schweißprozeß durchgeführt, wobei jedoch die vorgegebenen bzw. eingestellten Schweißparameter beibehalten werden und die weiteren nicht vorgegebenen Schweißparamter an diese angepaßt werden. Durch ein derartiges Vorgehen wird erreicht, daß der Benutzer einen Schweißprozeß, indem er seine persönlichen Schweißeigenschaften bzw. Schweißerfahrungen in die Berechnung bzw. in den Schweißprozeß einbringen kann, durchführen kann.

Tritt jedoch der Fall ein, daß ein oder mehrere Schweißparameter nicht mehr von dem Schweißgerät 1 durchgeführt werden können, d.h., daß diese Schweißparameter außerhalb der vorgegebenen Grenzwerte liegen, so werden diese von der Steuervorrichtung 4 an der Ein- und/oder Ausgabevorrichtung 22 angezeigt. Dabei ist es möglich, daß von der Steuervorrichtung 4 ein Warnsignal ausgesandt wird und/oder die Anzeige der Schweißparameter zu blinken beginnt, sodaß der Benutzer auf diesen Zustand aufmerksam gemacht wird. Der Benutzer hat dann die Möglichkeit, einige Schweißparameter zu ändern bzw. neu vorzugeben, sodaß eine neuerliche Berechnung der einzelnen Schweißparameter durchgeführt wird. Selbstverständlich ist es möglich, daß der Benutzer diese voreingestellten Grenzwerte ebenfalls verändern kann, sodaß mit den berechneten Schweißparametern ein Schweißprozeß durchgeführt wird.

Da der Benutzer die Möglichkeit hat, zwischen einer manuellen, halbautomatischen oder automatischen Schweißung, insbesondere einer Handschweißung und einer Roboterschweißung, zu unterscheiden, sind auch die vorgegebenen Grenzwerte für die beiden Schweißarten unterschiedlich definiert, da es beispielsweise möglich ist, daß bei einer Roboterschweißung eine höhere Schweißgeschwindigkeit 65 durchgeführt werden kann als bei einer Handschweißung.

Es bestehen nunmehr mehrere Möglichkeiten, wie die vorgegebenen Soll-Werte in der Speichervorrichtung 29 hinterlegt sein können. Dabei ist es möglich, daß für jeden Schweißnahtquerschnitt, insbesondere für die am häufigsten benötigten Schweißnahtquerschnitte, die einzelnen zur Bildung dieses Schweißnahtquerschnittes benötigten zusätzlichen Schweißparameter hinterlegt sind, wobei bei einem derartigen Speicherverfahren der einzelnen Soll-Werte ein hoher Speicherbedarf benötigt wird.

Erfindungsgemäß ist weiters vorgesehen, daß in der Speichervorrichtung 29 die Soll-Werte für zumindest einen Schweißparameter eines Schweißverfahrens für die Minimum- und Maximum-Werte in Form einer Minimum- und Maximum-Kurve gespeichert werden, d.h., daß beispielsweise in der Speichervorrichtung 29 für einen Minimum- und einen Maximum-Schweißnahtquerschnitt sämtliche Schweißparameter hinterlegt sind, wobei diese Soll-Werte gleichzeitig die Grenzwerte für die möglichen Schweißeinstellungen bilden. Es kann damit gesagt werden, daß die Soll-Werte für ein Schweißverfahren durch eine Mehrzahl von Minimum- und Maximum-Werten bzw. einer Minimum- und Maximum-Kurve gebildet sind. Damit jedoch auch Schweißnähte mit einem Querschnitt zwischen diesen beiden Kurven durchgeführt werden können, wird von der Steuervorrichtung 4 für dazwischenliegende Schweißnahtquerschnitte ein Interpolationsberechnungsverfahren eingesetzt, d.h., daß aufgrund der vorgegebenen Minimum- und Maximum-Kurve eine Berechnung der zwischen diesen beiden Kurven liegenden Werte bzw. Schweißparameter durchgeführt wird.

Hierzu muß der Benutzer nur einen entsprechenden Schweißnahtquerschnitt, also das a-Maß 64, über die Ein- und/oder Ausgabevorrichtung 22 einstellen, sodaß anschließend durch die Berechnung über das Interpolationsberechnungsverfahren die weiteren Schweißparamter festgelegt werden und somit eine selbständige Einstellung des Schweißgerätes 1 auf die berechneten bzw. ermittelten Schweißparameter von der Steuervorrichtung 4 durchgeführt werden kann.

Das Einstellen des Schweißnahtquerschnittes oder der Maßangaben für eine Schweißnaht kann der Benutzer durch den Aufruf bzw. die Auswahl des a-Maßes 64 oder der weiteren möglichen Zusatzparameter, wie beispielsweise des Nahtbreitenmaßes "b" oder des Schenkelmaßes "z", vornehmen. Damit der Benutzter erkennen kann, welche der Zusatzfunktionen bzw. der Schweißparameter von ihm eingestellt werden müssen, ist es möglich, daß, wie an der Ein- und/oder Ausgabevorrichtung 22 gezeigt, zwei 7-Segmentanzeigen 67 oder 68 angeordnet bzw. angesteuert werden, wobei dabei an einer 7-Segmentanzeige 67 oder 68 eine Kurzinformation, z.B.: a-M, b-M oder z-M, angezeigt wird und auf der weiteren 7-Segmetanzeige 67 oder 68 der dazugehörige Soll- bzw. Ist-Wert erscheint. Der Benutzer kann nunmehr, je nach Ausführung des Schweißgerätes 1, über den Hauptregler oder beispielsweise über ein Einstellorgan 47 oder eine Tastatur eine Änderung des angezeigten Wertes vornehmen. Hierzu ist es möglich, daß der Benutzer nur einen Zusatzparameter, insbesondere einen Schweißparameter, einstellen kann, sodaß anschließend ein selbständiges Berechnen der weiteren Schweißparameter durchgeführt wird. Durch ein derartiges Berechnungsverfahren wird eine sogenannte dreidimensionale Kennlinie erreicht.

Vorteilhaft ist hierbei, daß eine erheblichere Speicherplatzeinsparung erzielt wird, wobei für verschiedenste Schweißarten bzw. Schweißverfahren durch den geringen Platzbedarf eine große Anzahl unterschiedlicher Minimum- und Maximum-Kurven hinterlegt werden können.

Bei einem derartigen Berechnungsmodus ist es selbstverständlich wiederum möglich, daß der Benutzer einige Schweißparameter für die Berechnung, insbesondere für das Interpolationsberechnungsverfahren, vorgeben kann, sodaß diese Schweißparameter beibehalten werden und die verbleibenden Schweißparameter an die eingegebenen Schweißparameter angepaßt werden. Es ist auch möglich, daß der Benutzer sämtliche Schweißparameter vorgibt, worauf von der Steuervorrichtung 4 anschließend der Schweißnahtquerschnitt, nämlich das a-Maß 64 und die Schweißgeschwindigkeit 65, ermittelt werden.

Durch die Mitaufnahme der Schweißparameter, insbesondere der Zusatzfunktion, zum Berechnen des Schweißnahtquerschnittes ist es auch möglich, daß während eines Schweißprozesses eine Anpassung der weiteren Schweißparameter, wie beispielsweise des Drahtvorschubes, der Schweißspannung, des Schweißstromes, der Schweißgeschwindigkeit, von der Steuervorrichtung 4 durchgeführt werden kann, d.h., daß bei Änderung eines Schweißparameters, beispielsweise der Schweißgeschwindigkeit 65 mit vorgegebenem a-Maß 64, während des Schweißprozesses eine Anpassung der weiteren Schweißparameter, wie beispielsweise des Drahtvorschubes, erfolgen kann, sodaß wiederum sichergestellt ist, daß eine entsprechende Schweißnaht gebildet werden kann. Dazu ist es möglich, daß die Anpassung der einzelnen Schweißparameter über die Regelung der Soll-Werte oder der Ist-Werte durchgeführt wird, d.h., daß bei einer Regelung nach den vorgegebenen Soll-Werten erst eine Änderung der weiteren Schweißparameter durchgeführt wird, wenn während des Schweißprozesses von der Steuervorrichtung 4 ein neuer Soll-Wert vorgegeben wird, wobei bei einer Regelung nach den Ist-Werten des Schweißgerätes 1 eine ständige Anpassung der einzelnen Schweißparameter an die unterschiedlichen Ist-Werte durchgeführt wird.

Durch die Anwendung eines Interpolationsberechnungsverfahren, also durch Speicherung einer Minimum- und einer Maximum-Kurve für eine bestimmte Schweißart, ist es möglich, daß aufgrund des geringen Speicherbedarfs noch zusätzliche Parameter für die Berechnung eingefügt werden können. Dabei ist es möglich, daß beispielsweise das Material des Werkstückes 16, die Legierung des Werkstückes 16, das Gasgemisch, usw., für die Berechnung der

EP 1 077 784 B1

einzelnen Schweißparameter herangezogen werden kann.

Durch die Möglichkeit zur Berechnung der einzelnen Schweißparameter bei einer vorgegebenen Schweißnaht, insbesondere eines Schweißnahtquerschnittes, ist es auch möglich, daß im Schweißgerät 1, insbesondere in der Speichervorrichtung 29, eine Expertendatenbank angeordnet ist, sodaß der Benutzer über die Ein- und/oder Ausgabevorrichtung 22 oder über eine externe Komponente, wie beispielsweise einen Computer, auf diese zugreifen kann, sodaß durch Auslesen dieser Daten, der Benutzer entsprechend seiner Problemstellung Vergleichslösungen aufsuchen kann und anschließend diese Lösung der Steuervorrichtung 4 für die Geräteeinstellung zuteilt, sodaß eine automatische Einstellung des Schweißgerätes 1 durchgeführt wird. Selbstverständlich ist es möglich, daß der Benutzer diese Expertendatenbank mit seinem Fachwissen erweitern kann, sodaß dieser jederzeit die Möglichkeit hat, bei abermaligem Auftreten einer Problemlösung auf diese Daten zurückzugreifen.

Weiters ist es möglich, daß der Benutzer über das Schweißgerät 1 eine Berechnung der Streckenenergie durchführen kann, wobei die ermittelten Werte für die Berechnung des a-Maßes 64 herangezogen werden können. Hierzu ist es möglich, daß bei Auswahl des Schweißparameters des a-Maßes 64 die für die Berechnung der Streckenenergie benötigten Parameter von dem Schweißgerät 1 abgerufen bzw. die bereits eingestellten Parameter verwendet werden. Der Benutzer kann wiederum über die Ein- und/oder Ausgabevorrichtung 22 die einzelnen Parameter einstellen bzw. werden die bereits eingestellten Parameter für die Berechnung herangezogen.

Für die Berechnung der Streckenenergie wird von der Steuervorrichtung 4 die aus dem Stand der Technik bekannte Formel

$$E = I * U * 60 / v$$

verwendet, wobei die Streckenenergie "E" sich durch den Schweißstrom "I" mal der Lichtbogenspannung "U" mal dem Umrechnungsfaktor auf Minuten "60" durch die Schweißgeschwindigkeit "v" zusammensetzt.

Es ist auch möglich, daß über das Schweißgerät 1 eine Berechnung der Wärmeeinbringung durchgeführt werden kann. Die Wärmeeinbringung definiert sich beim Schweißen als die beim Schweißprozeß je Längeneinheit einer Schweißraupe bzw. einer Schweißnaht eingebrachte thermische Energie, insbesondere Wärme. In diesem Fall wird von der Steuervorrichtung 4 die berechnete Streckenenergie "E" mit dem thermischen Wirkungsgrad "n" des jeweils eingestellten bzw. durchgeführten Schweißverfahrens multipliziert, um die Wärmeeinbringung "WE" zu erhalten, sodaß sich die Formel

$$WE = E * n$$

ergibt.

Hierzu hat der Benutzer die Möglichkeit, daß dieser über die Ein- und/oder Ausgabevorrichtung 22 ein entsprechendes Schweißverfahren auswählen kann, sodaß von der Steuervorrichtung 4 ein in der Speichervorrichtung 29 hinterlegter Wert für den Wirkungsgrad "n" zur Berechnung herangezogen wird. Der relative thermische Wirkungsgrad "n" ist das Verhältnis des Wirkungsgrades des in Betracht kommenden Schweißverfahrens zu demjenigen des Unter-Pulver-Schweißens, wodurch in der Speichervorrichtung 29 eine entsprechende Tabelle für die unterschiedlichen Schweißverfahren hinterlegt sein können.

Die Multiplikatoren für die jeweiligen Schweißverfahren könnten beispielsweise wie folgt lauten:

| | |
|---|---|
| Unter-Pulver-Schweißen | n=1 |
| Lichtbogenhandschweißen mit basisch umhüllter Elektrode | n=0,9 |
| Lichtbogenhandschweißen mit rutil umhüllter Elektrode | n=0,8 |
| Metall-Aktivgasschweißen | n=0,85 |
| Metall-Inertgasschweißen | n=0,75 |
| Wolfram-Inertgasschweißen | n=0,65 |

Selbstverständlich ist es möglich, daß der Benutzer die obgenannten Werte über die Ein- und/oder Ausgabevorrichtung 22 verändern kann.

Durch die Berechnung der Streckenenergie und der Wärmeeinbringung wird erreicht, daß der Benutzer eine exakte Einstellung des Schweißgerätes 1 für eine vorgegebene Schweißnaht vornehmen kann, und somit fehlerhafte Schweißnähte verhindert werden.

Bei den zuvor beschriebenen Schweißverfahren zur Einstellung bzw. Eingabe einer Schweißnaht für die Bildung eines Schweißprozesses ist es auch möglich, daß für die Berechnung festgelegte Schweißparameter, wie der Drahtvorschub, als Vorgabewerte definiert sind, sodaß die restlichen Schweißparameter, wie die Schweißgeschwindigkeit 65, der Schweißstrom, usw., ausgehend von diesen Schweißparametern errechnet werden.

Selbstverständlich ist es möglich, daß aufgrund der Überwachung der einzelnen Schweißparameter die ermittelten bzw. gemessenen Werte in der Speichervorrichtung 29 gespeichert werden können, sodaß nach Beendigung des Schweißprozesses eine Auswertung der einzelnen Werte bzw. Daten durchgeführt werden kann.

Dabei ist es möglich, daß durch die Vorgabe der Schweißgeschwindigkeit 65 und/oder der Drahtvorschubgeschwindigkeit 54 von der Steuervorrichtung 4 der Verbrauch des Zusatzmaterials, insbesondere des Schweißdrahtes 13, bzw. die Abschmelzleistung "P" in kg/h berechnet werden kann. Die Abschmelzleistung kann von der Steuervorrichtung durch das spezifische Gewicht des Zusatzmaterials, insbesondere des Schweißdrahtes 13, ermittelt werden. Selbstverständlich ist es möglich, daß für die Berechnung der Abschmelzleistung bzw. des verbrauchten Zusatzmaterials jede beliebige aus dem Stand der Technik bekannte Formel bzw. jedes beliebige Verfahren eingesetzt werden kann. Hierzu ist es beispielsweise möglich, daß durch die nachstehende Formel eine Berechnung der Abschmelzleistung durchgeführt wird. Für die nachstehende Formel werden folgende Abkürzungen verwendet:

| Abschmelzleistung | "P in kg/h" |
| Zusatzmaterialdurchmesser | "d" |

Querschnitt des Zusatzmaterials, insbesondere des Schweißdrahtes 13: "$A_z = ( d^2 * \pi ) / 4$

| Drahtvorschubgeschwindigkeit | "$v_{draht}$" |
| Dichte des Zusatzwerkstoffes | "p" |

und ein Umrechnungsfaktor auf "kg/h" durch 1000 bzw. 60.

$$P = ( A_z * v_{draht} * p * 60 ) / 1000$$

Durch ein derartiges Ermittlungsverfahren der Abschmelzleistung bzw. des Verbrauches des Zusatzmaterials hat der Benutzer nunmehr die Möglichkeit, daß nach einem Schweißprozeß die verbrauchte Menge des Schweißdrahtes 13 ermittelt werden kann, sodaß er für einen weiteren Schweißprozeß abschätzen kann, wieviel Schweißdraht 13 sich noch auf der Vorratstrommel 14 befindet. Selbstverständlich ist es möglich, daß eine derartige Berechnung durch Vorabeingabe der Größe der Vorratstrommel 14 über die Steuervorrichtung 4 durchgeführt werden kann.

Selbstverständlich ist es möglich, daß weitere Auswerteverfahren über die Steuervorrichtung 4 durchgeführt werden können.

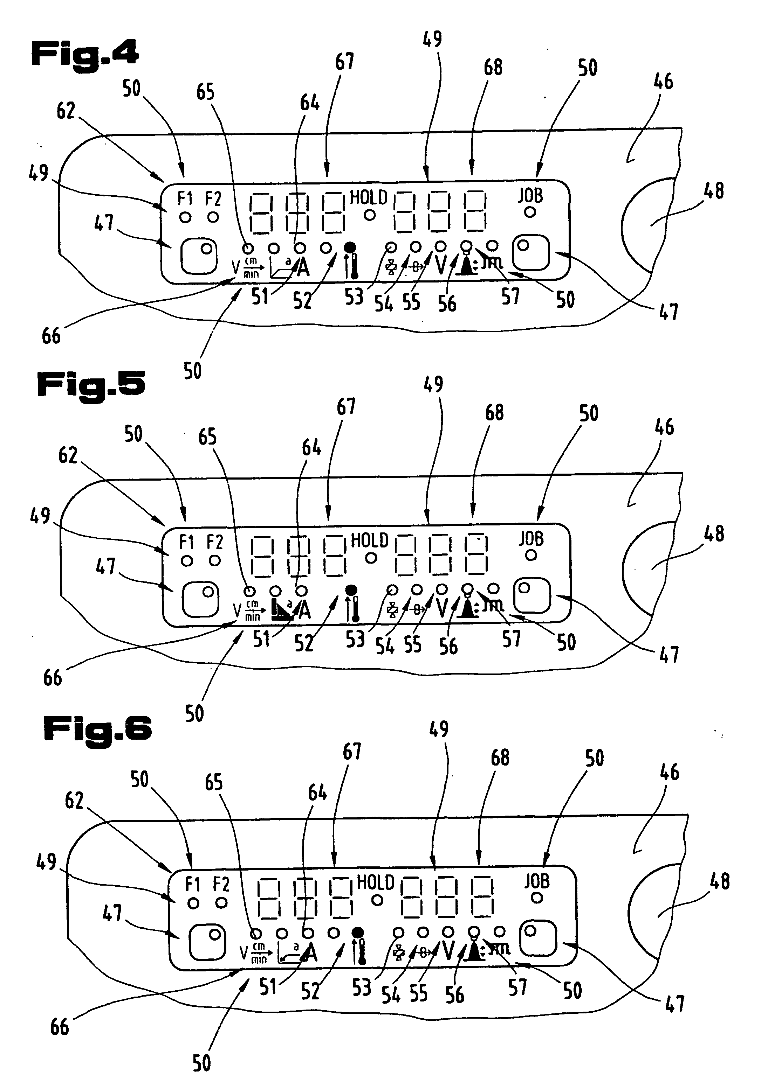

In den Fig. 4 bis 6 ist ein Teilbereich einer Ausführungsvariante der Ein- und/oder Ausgabevorrichtung 22 zum Einstellen des a-Maßes 64 und der Schweißgeschwindigkeit 65 gezeigt. Hierbei sind die Anzeigeorgane 66 mit den unterschiedlichsten Symbolen 50 dargestellt.

Die Funktion zur Anpassung bzw. Einstellung des a-Maßes 64 über die Anzeigeorgane 66 entspricht der Beschreibung der zuvor beschriebenen Figuren. Die symbolhafte Darstellung entspricht dabei den genormten Symbolen 50 zur Darstellung von Kehlnähten, sodaß ein Benutzer beim Verwenden eines derartigen Schweißgerätes 1 sofort erkennen kann, daß über diese Symbole 50, insbesondere die Anzeigeorgane 66, eine Einstellung des a-Maßes 64 und der Schweißgeschwindigkeit 65 jederzeit möglich ist.

In Fig. 7 ist ein Verfahren zum Ermitteln der Schweißgeschwindigkeit des Schweißbrenners 10 gezeigt. Bei dem dargestellten Schweißverfahren wird, wie in den zuvor beschriebenen Figuren, eine Kehlnaht 69 in Form einer Schweißraupe 70, insbesondere einer Schweißnaht, mit dem erfindungsgemäßen Schweißgerät 1 bzw. mit einem entsprechenden Steuerverfahren erzeugt.

Damit eine Kehlnaht 69 entsprechend den Angaben aus einer Schweißzeichnung zwischen zwei Werkstücken 16 und 71, die in einem Winkel beispielsweise von 90° miteinander verschweißt werden sollen, gebildet werden kann, muß der Benutzer entsprechend den Vorgaben aus der Schweißzeichnung eine Einstellung des Schweißgerätes 1, wie es in den zuvor beschriebenen Figuren erläutert ist, vornehmen.

Zur Überwachung der Schweißgeschwindigkeit ist es nunmehr möglich, daß der Schweißbrenner 10, wie bei dem dargestellten Ausführungsbeispiel gezeigt, beispielsweise von einem Benutzer von Hand entlang den beiden Kanten der Werkstücke 16 und 71 geführt wird. Damit die Schweißgeschwindigkeit ermittelt werden kann, ist im Schweißgerät 1 eine Geschwindigkeitsmeßvorrichtung angeordnet.

Diese Geschwindigkeitsmeßvorrichtung ist im Schweißgerät 1, insbesondere in der Steuervorrichtung 4, softwaremäßig und hardwaremäßig realisiert, sodaß durch das Starten eines Schweißprozesses von der Steuervorrichtung 4 die Schweißgeschwindigkeit des Schweißbrenners 10 automatisch bzw. selbständig ermittelt werden kann.

Selbstverständlich ist es möglich, daß der Benutzer die Überwachung der Schweißgeschwindigkeit deaktivieren kann und somit eine Schweißung entsprechend seiner Erfahrungswerte ohne Einflüsse der Geschwindigkeitsmeßvorrichtung durchführen kann.

Damit eine Überwachung der Schweißgeschwindigkeit und ein Schweißprozeß durchgeführt werden kann, müssen die beiden Werkstücke 16, 71, wie es aus dem Stand der Technik bekannt ist, über zumindest einen Kontakt 72 mit dem Schweißgerät 1 verbunden werden, wodurch ein Stromfluß bzw. Stromkreis vom Schweißbrenner 10 über den Kontakt 72 mit der Inverterstromquelle 31 geschaffen werden kann, d.h., daß durch das Ansteuern des Schweißbrenners 10 mit Energie ein Stromkreis über die Werkstücke 16, 71 aufgebaut wird. Der Stromkreis entsteht durch die Ausbildung des Lichtbogens 15 zwischen dem Schweißdraht 13 und dem Werkstück 16 oder 71, wobei aufgrund des Lichtbogens 15 eine Abschmelzung des Schweißdrahtes 13 erfolgt und somit die Schweißraupe 70 gebildet wird.

Damit nunmehr eine Geschwindigkeitsüberwachung des Schweißbrenners 10 erfolgen kann, wird das Werkstück 16 bzw. 71 mit zusätzlichen Meßkontakten 73, 74 kontaktiert. Diese Meßkontakte 73, 74 sind potentialfreie Kontakte, d.h., daß der Hauptstrom, der über das Werkstück 16, 71 fließt, nicht über die beiden Meßkontakte 73, 74 sondern über den Kontakt 72 an das Schweißgerät 1 zurückgeführt wird. Weiters ist ein weiterer Meßkontakt 75 bzw. Meßpunkt im Schweißbrenner 10 angeordnet. Die einzelnen Meßkontakte 73 bis 75 sind über Leitungen mit der Steuervorrichtung 4 verbunden, sodaß über die Meßkontakte 73 bis 75 die Steuervorrichtung 4 die Schweißgeschwindigkeit des Schweißbrenners 10 ermitteln kann.

Damit jedoch der Benutzer bzw. der Schweißer von der Steuervorrichtung 4 auf die Richtigkeit der Schweißgeschwindigkeit, also der Führungsgeschwindigkeit des Schweißbrenners 10, aufmerksam gemacht werden kann, ist es möglich, daß der Schweißbrenner 10 zusätzlich zumindest ein Anzeigeorgan 76, bevorzugt jedoch drei Anzeigeorgane 76 bis 78 aufweist. Die Anzeigeorgane 76 bis 78 können bevorzugt als Leuchtdioden ausgebildet sein, wobei beispielsweise jedes Anzeigeorgan 76 bis 78 aus unterschiedlichen Farben, insbesondere aus den Farben Rot, Grün und Gelb, gebildet sein können. Die einzelnen Anzeigeorgane 76 bis 78 werden wiederum über die Steuervorrichtung 4 angesteuert bzw. aktiviert, wodurch das entsprechend angesteuerte Anzeigeorgan 76 bis 78 zu leuchten beginnt und somit der Benutzer erkennen kann, ob die Schweißgeschwindigkeit mit der über die Ein- und/oder Ausgabevorrichtung 22 eingestellten Schweißgeschwindigkeit übereinstimmt oder abweicht.

Hierzu ist es möglich, daß jeweils ein Anzeigeorgan 76 bis 78 einen Zustand für die Schweißgeschwindigkeit anzeigt, d.h., daß beispielsweise beim Leuchten des Anzeigeorgans 76 der Benutzer aufmerksam gemacht wird, daß eine zu hohe Vorwärtsbewegung des Schweißbrenners 10, also eine zu hohe Schweißgeschwindigkeit, von ihm durchgeführt wird, sodaß eine entsprechende Anpassung vom Benutzer durch Verlangsamung der Führung des Schweißbrenners 10 durchgeführt werden kann, wobei die weiteren Anzeigeorgane 77, 78 für die Anzeige der Zustände, daß die Schweißgeschwindigkeit richtig bzw. zu gering ist, verwendet werden.

Das Verfahren zum Ermitteln der Schweißgeschwindigkeit erfolgt in Form einer Widerstandsbrücke, d.h., daß durch die drei Meßpunkte bzw. Meßkontakte 73 bis 75 die Steuervorrichtung 4 in Form eines Spannungsteilers aufgrund der Veränderung der einzelnen Spannungen auf die Schweißgeschwindigkeit rückschließen kann. Hierzu wird bei der Inbetriebnahme des Schweißgerätes 1, also vor dem Start des Schweißprozesses, eine Ist-Wertmessung zwischen den beiden am Werkstück 16 oder 71 befindlichen Meßkontakten 73 bis 74 durchgeführt und somit von der Steuervorrichtung 4 die anliegende Gesamtspannung 79 ermittelt. Durch das Ermitteln der Gesamtspannung 79 wird nun eine Kalibrierung der Steuervorrichtung 4 vorgenommen, d.h., daß ausgehend von der Gesamtspannung 79 die auftretenden Teilspannungen 80, 81, die durch die Bildung des Stromkreises über den Schweißbrenner 10 zu den einzelnen am Werkstück 16 oder 71 angeordneten Meßkontakte 73, 74 auftreten, ermitteln werden, d.h., daß die Schweißgeschwindigkeit aufgrund einer über das Werkstück 16 oder 71 gebildeten Widerstandsbrücke berechnet wird. Durch die Bildung der Widerstandsbrücke werden von der Steuervorrichtung 4, ausgehend von dem Meßkontakt 75 am Schweißbrenner 10 die einzelnen Teilspannungen 80, 81 zu den Meßkontakten 73, 74 ermittelt.

Durch die Bewegung des Schweißbrenners 10 von einem Meßkontakt 74 zum weiteren Meßkontakt 73 tritt nunmehr eine Änderung der einzelnen Teilspannungen 80, 81 durch das Entfernen bzw. Näherkommen des Schweißbrenners 10 von bzw. an die Meßkontakte 73, 74 auf, d.h., daß aufgrund des Abstandes des Schweißbrenners 10, insbesondere den Übergang des Lichtbogens 15 an das Werkstück 16 oder 71, eine Widerstandsänderung in bezug auf die Meßkontakte 73, 74 entsteht und somit eine Änderung der Teilspannungen 80, 81 auftritt. Die Steuervorrichtung 4 ermittelt durch die Änderung der Teilspannungen 80, 81 in bezug auf eine voreinstellbare Zeitdauer die Geschwindigkeit der Vorwärtsbewegung des Schweißbrenners 10, also die Schweißgeschwindigkeit, sodaß durch Ansteuern der Anzeigeorgane 76 bis 78 der Benutzer auf den Zustand der Schweißgeschwindigkeit aufmerksam gemacht werden kann und somit eine Anpassung vom Benutzer durchgeführt werden kann.

Die Ermittlung der Schweißgeschwindigkeit erfolgt nun derartig, daß nach dem Kalibrieren der Steuervorrichtung 4 auf die Gesamtspannung 79 der Schweißprozeß vom Benutzer gestartet werden kann, sodaß der Lichtbogen 15 zwischen dem Werkstück 16 bzw. 71 und dem Schweißbrenner 10, insbesondere dem Schweißdraht 13 aufgebaut wird, sodaß aufgrund der Bildung des Stromflusses vom Schweißbrenner 10 über das Werkstück 16 zum Kontakt 72 eine Art Widerstandsbrücke am Werkstück 16 erzeugt wird, wobei jedoch die einzelnen Meßkontakte 73 bis 75 potentialfrei ausgebildet sind. Durch eine derartige Widerstandsbrücke entstehen durch die unterschiedlichen Abstände des Schweißbrenners 10, insbesondere durch den Lichtbogen 15, zu den Meßkontakten 73, 74 unterschiedliche Teilspannungen 80, 81, wodurch aufgrund der kontinuierlicher Messung zwischen den einzelnen Meßkontakten 73 bis 75 die Steuervorrichtung 4 unterschiedliche Teilspannungen 80 bis 81 ermittelt, wie dies beispielsweise durch die in strichlierten Linien und die in strich-punktierten Linien schematisch dargestellten Teilspannungen 80, 81 gezeigt ist.

Daraus ist ersichtlich, daß beispielsweise die Teilspannung 80 durch die Führung des Schweißbrenners 10 - gemäß Pfeil 82 - in bezug auf den Meßkontakt 74 vergrößert wird, wogegen die Teilspannung 81 in bezug auf den Meßkontakt 73 verringert wird. Durch die Ermittlung der Änderung der einzelnen Teilspannungen 80, 81 in bezug auf eine voreinstellbare Zeitdauer kann nunmehr die Steuervorrichtung 4 auf die Schweißgeschwindigkeit zurückschließen bzw. diese berechnen. Für die Ermittlung der Schweißgeschwindigkeit ist es jedoch erforderlich, daß für einen Schweißprozeß die einzelnen Meßkontakte 73, 74 an den gegenüberliegenden Enden des Werkstückes 16 oder 71 positioniert werden.

Selbstverständlich ist es möglich, daß weitere Meßkontakte bzw. Meßpunkte an dem Werkstück 16, insbesondere an den Seitenkanten des Werkstückes 16, angeordnet werden können, wodurch eine Geschwindigkeitsmessung in seitlicher Richtung durch Bildung eines weiteren Widerstandsbereiches durchgeführt werden kann. Um eine horizontale Geschwindigkeitsmessung durchführen zu können, müssen die einzelnen Meßkontakte übereinander am Werkstück 16 angeordnet werden.

Durch die automatische Ermittlung der Schweißgeschwindigkeit des Schweißbrenners 10 bei Handschweißungen ist es nunmehr möglich, daß ein exakter Schweißprozeß entsprechend den Einstellungen des a-Maßes 64 für Schweißnähte, insbesondere für Kehlnähte, durchgeführt werden kann. Selbstverständlich ist es möglich, daß die Geschwindigkeitsmessung des Schweißbrenners 10 auch für weitere Schweißverfahren eingesetzt werden kann.

Dieses Verfahren zur Ermittlung der Schweißgeschwindigkeit 65 kann an jedem beliebigen Werkstück 16, 71 aus den unterschiedlichen Materialien angewendet werden, da für die Ermittlung der Teilspannungen 80, 81 nur zumindest zwei zusätzliche Meßkontakte 73, 74 am Werkstück 16, 71 angebracht werden müssen, wobei durch eine Kalibrierung auf die Gesamtspannung 79 nunmehr auf das Material des Werkstückes 16 oder 71 nicht mehr Rücksicht genommen werden muß.

Der Vorteil einer derartigen Geschwindigkeitsmeßvorrichtung liegt nun darin, daß ohne zusätzliche externe Komponente, außer den Meßkontakten 73 bis 75, eine Überwachung der Schweißgeschwindigkeit des Schweißbrenners 10 nur über einen elektronischen Meßvorgang durchgeführt werden kann.

Selbstverständlich ist es möglich, daß alle weiteren Verfahren zur Ermittlung der Schweißgeschwindigkeit eines Schweißbrenners 10 für ein derartiges Schweißgerät 1 eingesetzt werden können. Hierzu ist es auch möglich, daß diese Verfahren über eine Schnittstelle mit der Steuervorrichtung 4 gekuppelt werden können, sodaß ein direkter Datenaustausch bzw. Datentransfer zwischen dem externen Gerät und der Steuervorrichtung 4 durchgeführt werden kann. Es ist auch möglich, daß mechanische Vorrichtungen am Schweißbrenner 10 angeordnet werden können, wodurch durch Bewegung des Schweißbrenners 10 die Schweißgeschwindigkeit ermittelt werden kann. Hierzu ist es beispielsweise möglich, daß ein federnd gelagertes Rad am Schweißbrenner 10 angeordnet ist, sodaß bei Bewegung des Schweißbrenners 10 aufgrund der Drehbewegung des Rades die Schweißgeschwindigkeit von der Steuervorrichtung 4 ermittelt werden kann.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

**Bezugszeichenaufstellung**

1    Schweißgerät
2    Stromquelle
3    Leistungsteil
4    Steuervorrichtung
5    Umschaltglied

6    Steuerventil
7    Versorgungsleitung
8    Gas
9    Gasspeicher
10    Schweißbrenner

| 11 | Drahtvorschubgerät |
|----|--------------------|
| 12 | Versorgungsleitung |
| 13 | Schweißdraht |
| 14 | Vorratstrommel |
| 15 | Lichtbogen |
| 16 | Werkstück |
| 17 | Versorgungsleitung |
| 18 | Versorgungsleitung |
| 19 | Kühlkreislauf |
| 20 | Strömungswächter |
| 21 | Wasserbehälter |
| 22 | Ein- und/oder Ausgabevorrichtung |
| 23 | Mikroprozessorsteuerung |
| 24 | Leitung |
| 25 | Leitung |
| 26 | Eingabevorrichtung |
| 27 | Ausgabevorrichtung |
| 28 | Bussystem |
| 29 | Speichervorrichtung |
| 30 | Leitung |
| 31 | Inverterstromquelle |
| 32 | Versorgungsleitung |
| 33 | Versorgungsleitung |
| 34 | Spannungsversorgungsnetz |
| 35 | Hochfrequenzgenerator |
| 36 | Leitung |
| 37 | Leitung |
| 38 | Meßvorrichtung |
| 39 | Shunt |
| 40 | Leitung |
| 41 | Leitung |
| 42 | Wandlervorrichtung |
| 43 | Leitung |
| 44 | Leitung |
| 45 | Leitung |
| 46 | Frontplatte |
| 47 | Einstellorgan |
| 48 | Hauptregler |
| 49 | Anzeigeorgan |
| 50 | Symbol |
| 51 | Schweißstrom |
| 52 | Übertemperatur |
| 53 | Materialstärke |
| 54 | Drahtvorschubgeschwindigkeit |
| 55 | Schweißspannung |
| 56 | Lichtbogenlänge |
| 57 | Stromanstieg |
| 58 | Drahtdurchmesser |
| 59 | Gasmischung |

16

| 60 | Schweißprozeß |
|---|---|
| 61 | Zusatzfunktion |
| 62 | Speicherelement |
| 63 | Speichertaste |
| 64 | a-Maß |
| 65 | Schweißgeschwindigkeit |
| 66 | Anzeigeorgan |
| 67 | 7-Segmentanzeige |
| 68 | 7-Segmentanzeige |
| 69 | Kehlnaht |
| 70 | Schweißraupe |
| 71 | Werkstück |
| 72 | Kontakt |
| 73 | Meßkontakt |
| 74 | Meßkontakt |
| 75 | Meßkontakt |
| 76 | Anzeigeorgan |
| 77 | Anzeigeorgan |
| 78 | Anzeigeorgan |
| 79 | Gesamtspannung |
| 80 | Teilspannung |
| 81 | Teilspannung |
| 82 | Pfeil |

**Patentansprüche**

1. Verfahren zum Steuern eines Schweißgerätes (1) bzw. einer Stromquelle (2), bei dem über eine Ein- und/oder Ausgabevorrichtung (22) unterschiedliche Schweißparameter, wie beispielsweise ein Schweißstrom, ein Schweißdrahtdurchmesser, ein Schweißverfahren, eine Fläche oder ein Querschnitt einer Kehlnaht, von einem Benutzer eingestellt werden können, wobei vor, während und/oder nach dem Start des Schweißprozesses zumindest die Einstellung der Fläche oder des Querschnitts der Kehlnaht durch Eingabe einer Bemaßung der Kehlnaht in Form eines Nahtdickenmaßes a (a-Maß (64)), oder eines Nahtbreitenmaßes b (b-Maß), oder eines Schenkelmaßes z (z-Maß) erfolgt und hierzu eine Einstellmöglichkeit an der Ein- und/oder Ausgabevorrichtung (22), die insbesondere durch ein Anzeigeorgan (66) bzw. Symbol (50) dargestellt ist, für die Bemaßung der Kehlnaht ausgewählt wird und ein Wert für die Bemaßung eingegeben wird, wobei die eingestellten Schweißparameter an eine Steuervorrichtung (4) übergeben werden, hinterlegte Soll-Werte für zusätzliche Parameter zur Bildung der Kehlnaht abgefragt und/oder für den Schweißvorgang bereitgestellt bzw. angezeigt werden und anschließend das Schweißgerät (1) bzw. die Stromquelle (2) entsprechend den vorgegebenen Schweißparametern von der Steuervorrichtung (4) angesteuert wird und die berechneten Schweißparameter ständig an die vorliegende Schweißgeschwindigkeit so angepaßt werden, dass eine vorgegebene Kehlnaht erstellt wird.

2. Verfahren nach Anspruch 1, **dadurch gekennzeichnet, daß** über einen Hauptregler (48) der Ein- und/oder Ausgabevorrichtung (22) der Benutzer die Soll-Werte verändern kann.

3. Verfahren nach Anspruch 1 oder 2, **dadurch gekennzeichnet, daß** der Schweißparameter eines a-Maßes (64) über die Einstellmöglichkeit für die Fläche oder den Querschnitt der Kehlnaht an der Ein- und/oder Ausgabevorrichtung (22) eingestellt werden kann.

4. Verfahren nach einem der vorhergehenden Ansprüche, **dadurch gekennzeichnet, daß** zur Bildung der Kehlnaht von unterschiedlichen Schweißparametern, wie dem Nahtdickenmaß a, nämlich einem a-Maß (64), dem Nahtbreitenmaß b und einem Schenkelmaß z ausgegangen werden kann, wobei für die Berechnung der Schweißparameter, insbesondere des a-Maßes (64), von der Steuervorrichtung (4) weitere Schweißparameter, wie beispielsweise ein Drahtvorschub, eine Schweißspannung oder ein Schweißstrom, herangezogen werden.

17

**5.** Verfahren nach einem der vorhergehenden Ansprüche, **dadurch gekennzeichnet, daß** ein Winkel der zu verschweißenden Werkstücke (16) für die Berechnung bzw. Einstellung eines a-Maßes (64) berücksichtigt wird, wobei die Einstellung des Winkels der zu verschweißenden Werkstücke (16) über die Ein- und/oder Ausgabevorrichtung (22) erfolgt.

**6.** Verfahren nach einem der vorhergehenden Ansprüche, **dadurch gekennzeichnet, daß** die über die Ein- und/oder Ausgabevorrichtung (22) eingestellten Schweißparameter an die Steuervorrichtung (4) übergeben werden, worauf die Steuervorrichtung (4) Soll-Werte für den entsprechenden Schweißprozeß errechnet und die einzelnen Komponenten des Schweißgerätes (1) entsprechend den vorgegebenen Einstellungen und/oder berechneten Werten angesteuert werden.

**7.** Verfahren nach einem der vorhergehenden Ansprüche, **dadurch gekennzeichnet, daß** von dem Schweißgerät (1) bzw. von der Steuervorrichtung (4) und/oder einer übergeordneten oder untergeordneten externen Steuervorrichtung, z.B. einer SPS oder einem Computer, die Schweißgeschwindigkeit überwacht wird.

**8.** Verfahren nach einem der vorhergehenden Ansprüche, **dadurch gekennzeichnet, daß** die einzelnen Schweißparameter zur Bildung eines a-Maßes (64) hintereinander bzw. taktweise an der Ein- und/oder Ausgabevorrichtung (22) angezeigt werden.

**9.** Verfahren nach einem oder mehreren der vorhergehenden Ansprüche, **dadurch gekennzeichnet, daß** der Schweißparameter für die Schweißgeschwindigkeit, insbesondere die von einem Benutzer angewöhnte Schweißgeschwindigkeit, in einer Speichervorrichtung (29) gespeichert werden kann.

**10.** Verfahren nach Anspruch 9, **dadurch gekennzeichnet, daß** zur Berechnung der vorgegebenen Kehlnaht die in der Speichervorrichtung (29) hinterlegte Schweißgeschwindigkeit, insbesondere die benutzerspezifische Schweißgeschwindigkeit, herangezogen wird.

**11.** Verfahren nach einem der vorhergehenden Ansprüche, **dadurch gekennzeichnet, daß** von der Steuervorrichtung (4) die weiteren berechneten Schweißparameter derart verändert werden, daß der vom Benutzer eingestellte Schweißparameter, insbesondere die benutzerspezifische Schweißgeschwindigkeit, beibehalten werden kann.

**12.** Verfahren nach einem der vorhergehenden Ansprüche, **dadurch gekennzeichnet, daß** die Schweißgeschwindigkeit, insbesondere die Führung des Schweißbrenners (10), von dem Schweißgerät (1), insbesondere von der Steuervorrichtung (4), erfaßt bzw. ermittelt wird.

**13.** Verfahren nach einem der vorhergehenden Ansprüche, **dadurch gekennzeichnet, daß** für die Erfassung der Schweißgeschwindigkeit im Schweißgerät (1) eine Geschwindigkeitsmeßvorrichtung eingesetzt wird.

**14.** Verfahren nach Anspruch 13, **dadurch gekennzeichnet, daß** vor dem Start eines Schweißprozesses von der Steuervorrichtung (4) eine Kalibrierung der Geschwindigkeitsmeßvorrichtung durchgeführt wird, wobei hierzu von der Steuervorrichtung (4) eine Gesamtspannung zwischen den an dem Werkstück (16) angeordneten Meßkontakten (73 bis 75) ermittelt wird.

**15.** Verfahren nach einem der vorhergehenden Ansprüche, **dadurch gekennzeichnet, daß** die Steuervorrichtung (4) einzelne Teilspannungen (80, 81) zwischen einem Meßkontakt (75) am Schweißbrenner und zumindest zwei weiteren Meßkontakten (73, 74) am Werkstück (16) ermittelt, worauf aufgrund der Änderung der Teilspannungen (80, 81) in bezug auf eine voreinstellbare Zeitdauer von der Steuervorrichtung (4) die Schweißgeschwindigkeit ermittelt wird.

**16.** Verfahren nach Anspruch 15, **dadurch gekennzeichnet, daß** die Ermittlung bzw. die Messung der Teilspannung (80; 81) von der Steuervorrichtung (4) kontinuierlich oder in gewissen Zeitabständen erfolgt.

**17.** Verfahren nach einem der vorhergehenden Ansprüche, **dadurch gekennzeichnet, daß** entsprechend der ermittelten Schweißgeschwindigkeit von der Steuervorrichtung (4) zumindest ein am Schweißbrenner (10) angeordnetes Anzeigeorgan (76 bis 78) aktiviert wird.

**18.** Verfahren nach einem der vorhergehenden Ansprüche, **dadurch gekennzeichnet, daß** von der Steuervorrichtung (4) eine Streckenenergie ermittelt wird, wobei die für die Berechnung der Streckenenergie erforderlichen Werte über die Ein- und/oder Ausgabevorrichtung (22) eingegeben werden.

19. Verfahren nach Anspruch 18, **dadurch gekennzeichnet, daß** von der Steuervorrichtung (4) in Abhängigkeit der Streckenenergie die Wärmeeinbringung berechnet wird, wobei die für die Berechnung notwendigen Multiplikatoren von einer in einer Speichervorrichtung (29) hinterlegten Tabelle herangezogen werden.

20. Verfahren nach einem der vorhergehenden Ansprüche, **dadurch gekennzeichnet, daß** eine Abschmelzleistung von der Steuervorrichtung (4) durch das spezifische Gewicht des Zusatzmaterials, insbesondere des Schweißdrahtes (13), ermittelt wird.

21. Steuervorrichtung (4) für ein Schweißgerät (1) bzw. eine Stromquelle (2), bestehend aus einer mit der Steuervorrichtung (4), bevorzugt mit einer Mikroprozessorsteuerung, verbundenen Ein- und/oder Ausgabevorrichtung (22) für Schweißparameter wie beispielsweise einen Schweißstrom, einen Schweißdrahtdurchmesser, ein Schweißverfahren, einer Fläche oder einen Querschnitt einer Kehlnaht, einer Speichervorrichtung (29) für Betriebsdaten und einem Leistungsteil (3), insbesondere einer Inverterstromquelle (31), wobei zur Einstellung der Fläche oder des Querschnitts der Kehlnaht an der Ein- und/oder Ausgabeeinrichtung (22) eine aktivierbare Einstellmöglichkeit für eine Bemaßung der Kehlnaht vorgesehen ist, die insbesondere durch ein Anzeigeorgan (66) in Form einer Leuchtdiode und als Symbol (50) an einer Frontplatte (46) dargestellt ist, wobei bei aktivierter Einstellmöglichkeit ein Wert für die Bemaßung der Kehlnaht, die in Form eines Nahtdickenmaßes a, oder eines Nahtbreitenmaßes b, oder eines Schenkelmaßes z realisiert ist, an der Ein- und/oder Ausgabeeinrichtung (22) eingegeben werden kann und in der Speichervorrichtung (4) des Schweißgerätes (1) Soll-Werte hinterlegt sind, die bei der Einstellung der Fläche oder des Querschnittes der Kehlnaht über die Ein- und/oder Ausgabevorrichtung (22) einstellbar und/oder veränderbar sind, wobei dem Schweißgerät (1) eine Geschwindigkeitsmeßvorrichtung zur Erfassung der Schweißgeschwindigkeit zugeordnet ist und die Berechnung der Schweißparameter beim Schweißen ständig so angepaßt ist, daß eine vorgegebene Kehlnaht entsteht

22. Steuervorrichtung nach Anspruch 21, **dadurch gekennzeichnet, daß** die Geschwindigkeitsmeßvorrichtung durch hardwaremäßige und softwaremäßige Komponenten realisiert ist.

23. Steuervorrichtung nach Anspruch 22, **dadurch gekennzeichnet, daß** die hardwaremäßige Komponente durch zwei an dem Werkstück (16) angeordnete Meßkontakte (73, 74) und einem am Schweißbrenner (10) angeordneten Meßkontakt (75) gebildet ist.

24. Steuervorrichtung nach einem der Ansprüche 21 bis 23, **dadurch gekennzeichnet, daß** die Geschwindigkeitsmeßvorrichtung durch eine Widerstandsbrücke am Werkstück (16) gebildet ist.

**Claims**

1. Method of controlling a welding unit (1) and a current source (2), in which various welding parameters such as a welding current, a welding wire diameter, a welding method, a surface area or a cross section of a fillet weld, can be set by a user via an input and/or output device (22), whereby prior to, during and/or after start-up of the welding process, at least the surface area or the cross-section of the fillet weld is set by entering a dimension of the fillet weld in the form of a seam thickness measurement a (a-measurement (64)) or a seam width measurement b (b-measurement) or a side length measurement z (z-measurement) and, to this end, a setting option on the input and/or output device (22) depicted in particular by means of a display element (66) or symbol (50) is selected for the dimension of the fillet weld and a value for the dimension is entered , whereupon the set welding parameters are transmitted to a control device (4) and stored desired values for additional parameters needed to form the fillet weld are scanned and/or retrieved or displayed for the welding process, after which the welding unit (1) and the current source (2) are activated by the control device (4) on the basis of the pre-set welding parameters and the computed welding parameters are continuously adapted to the prevailing welding speed so that a predefined fillet weld is produced.

2. Method as claimed in claim 1, **characterised in that** the user can amend the desired values via a main controller (48) of the input and/or output device (22).

3. Method as claimed in claim 1 or 2, **characterised in that** an additional welding parameter of an a-measurement (64) can be set by means of the setting option for the surface area or the cross-section of the fillet weld at the input and/or output device (22).

4. Method as claimed in one of the preceding claims, **characterised in that** different parameters may be used as the starting point for forming a fillet weld, such as the seam thickness measurement a, namely an a-measurement (64), the seam width measurement b and a side length measurement z, and other welding parameters such as a wire feed rate, a welding voltage or a welding current are applied by the control device (4) in order to compute the welding parameters, in particular the a-measurement (64).

5. Method as claimed in one of the preceding claims, **characterised in that** an angle of the workpieces (16) to be welded is taken into account for computing or setting an a-measure ment (64), it being possible to set the angle of the workpieces (16) to be welded from the input and/or output device (22).

6. Method as claimed in of the preceding claims, **characterised in that** the welding parameters set via the input and/or output device (22) are transmitted to the control device (4), after which the control device (4) calculates desired values for the corresponding welding process and the individual components of the welding unit (1) are activated on the basis of the predetermined settings and/or calculated values.

7. Method as claimed in of the preceding claims, **characterised in that** the welding speed is monitored by the welding unit (1) or by the control device (4) and/or a primary or subordinate control device, e.g. a programmable logic controller or a computer.

8. Method as claimed in one of the preceding claims, **characterised in that** the individual welding parameters for forming an a-measurement (64) are displayed one after the other or in cycles at the input and/or output device (22).

9. Method as claimed in one or more of the preceding claims, **characterised in that** the welding parameter for the welding speed, in particular the welding speed to which a user is accustomed, can be stored in a memory device (29).

10. Method as claimed in claim 9, **characterised in that** the welding speed stored in the memory device (29), in particular the user-specific speed, is applied as a means of computing the pre-set fillet weld.

11. Method as claimed in one of the preceding claims, **characterised in that** the other welding parameters computed by the control device (4) are amended in such a way that the welding parameters set by the user, in particular the user-specific welding speed, can be maintained.

12. Method as claimed in one of the preceding claims, **characterised in that** the welding speed, in particular the guiding of the welding torch (10), is detected or determined by the welding unit (1), in particular by the control device (4).

13. Method as claimed in one of the preceding claims, **characterised in that** a speed measuring device is used to enable the welding speed to be detected in the welding unit (1).

14. Method as claimed in claim 13, **characterised in that** prior to start-up of a welding process by the control device (4), the speed measuring device is calibrated, whereby a total voltage is measured by the control device (4) between measurement contacts (73 to 75) disposed on the workpiece (16).

15. Method as claimed in one of the preceding claims, **characterised in that** the control device (4) detects individual part voltages (80, 81) between a measurement contact (75) on the welding torch and at least two other measurement contacts (73, 74) on the workpiece (16), after which the welding speed is determined by the control device (4) on the basis of the change in the part voltages (80, 81) relative to a pre-settable period of time.

16. Method as claimed in claim 15, **characterised in that** the part voltage (80; 81) is determined or measured by the control device (4) continuously or at certain time intervals.

17. Method as claimed in one of the preceding claims, **characterised in that** at least one display element (76 to 78) disposed on the welding torch (10) is activated depending on the welding speed detected by the control device (4).

18. Method as claimed in one of the preceding claims, **characterised in that** the energy on a line can be detected by the control device (4) and the values needed to compute the line energy are entered via the input and/or output device (22).

19. Method as claimed in claim 18, **characterised in that** the heat applied is computed by the control device (4) depending on the line energy and the multiplication factors needed for the computation are applied from a table stored in the memory device (29).

20. Method as claimed in one of the preceding claims, **characterised in that** a flux supply is detected by the control device (4) by means of the specific weight of the additional material, in particular the welding wire (13).

21. Control device (4) for a welding unit (1) and a current source (2), consisting of an input and/or output device (22) connected to the control device (4), preferably to a microprocessor controller, for welding parameters such as, for example, a welding current, a welding wire diameter, a welding method, a surface area or a cross-section of a fillet weld, a memory device (29) for storing operating data and a power component (3), in particular an inverter current source (31), and in order to set the surface area or cross-section of the fillet weld, an activatable setting option for a measurement of the fillet weld is provided on the input and/or output device (22), in particular by means of a display element (66) in the form of a light emitting diode and as a symbol (50) on a front plate (46), and when the setting option is activated, a value for the dimension of the weld fillet in the form of a seam thickness measurement a or a seam width measurement b or a side length measurement z can be entered at the input and/or output device (22), and desired values are stored in the memory device (29) of the welding unit (1) which can be adjusted and/ or edited from the input and/or output device (22) when setting the surface area or cross-section of the fillet weld, and a speed-measuring device for detecting the welding speed co-operates with the welding unit (1) and the computation of the welding parameters is constantly adapted during welding so that a predefined fillet weld is obtained.

22. Control device as claimed in claim 21, **characterised in that** the speed measuring device is provided in the form of hardware and software components.

23. Control device as claimed in claim 22, **characterised in that** the hardware components are two measurement contacts (73, 74) disposed on the workpiece (16) and a measurement contact (75) disposed on the welding torch (10).

24. Control device as claimed in one of claims 21 to 23, **characterised in that** the speed measuring device is provided as a resistance bridge on the workpiece (16).

**Revendications**

1. Procédé de commande d'un appareil à souder (1) respectivement d'une source de courant (2), dans lequel, par un dispositif d'entrée et/ou d'émission (22), différents paramètres de soudage, comme par exemple un courant de soudage, un diamètre du fil d'apport, un procédé de soudage, une face ou une section transversale d'une soudure d'angle, peuvent être réglés par un utilisateur, où avant, pendant et/ou après le démarrage du processus de soudage, au moins le réglage de la face ou de la section transversale de la soudure d'angle a lieu par l'entrée d'une dimension de la soudure d'angle sous la forme d'une mesure d'épaisseur de soudure a (mesure a(64)) ou d'une mesure de largeur de soudure b (mesure b) ou d'une mesure de branche z (mesure z), et à cette fin une possibilité de réglage au dispositif d'entrée et/ou de sortie (22), qui est représentée en particulier par un organe d'affichage (66) respectivement symbole (50), est sélectionnée pour le dimensionnement de la soudure d'angle et une valeur pour le dimensionnement est entrée, où les paramètres de soudage réglés sont transmis à un dispositif de commande (4), des valeurs de consigne stockées sont appelées pour des paramètres additionnels pour former la soudure d'angle et/ou sont mises à disposition respectivement affichées pour l'opération de soudage, et ensuite l'appareil de soudage (1) respectivement la source de courant (2) est commandée conformément aux paramètres de soudage prédéfinis par le dispositif de commande (4), et les paramètres de soudage calculés sont adaptés continuellement à la vitesse de soudage présente de façon qu'une soudure d'angle prédéfinie soit réalisée.

2. Procédé selon la revendication 1, **caractérisé en ce que** par un régulateur principal (48) du dispositif d'entrée et/ ou d'émission (22), l'utilisateur peut modifier les valeurs de consigne.

3. Procédé selon la revendication 1 ou 2, **caractérisé en ce que** le paramètre de soudage d'une mesure a(64) peut être réglé par la possibilité de réglage de la face ou de la section transversale de la soudure d'angle au dispositif d'entrée et/ou d'émission (22).

4. Procédé selon l'une des revendications précédentes, **caractérisé en ce que** pour la formation de la soudure d'angle, on peut partir de paramètres de soudage différents, comme de la mesure d'épaisseur de soudure a, à savoir une mesure a(64), de la mesure de largeur de soudure b et d'une mesure de branche z, où pour le calcul des paramètres de soudage, en particulier de la mesure a(64), le dispositif de commande (4) fait appel à d'autres paramètres de soudage, comme par exemple une poussée du fil, une tension de soudage ou un courant de soudage.

5. Procédé selon l'une des revendications précédentes, **caractérisé en ce qu'**un angle des pièces à souder (16) pour le calcul respectivement le réglage d'une mesure a(64) est considéré, où le réglage de l'angle des pièces à souder (16) a lieu par le dispositif d'entrée et/ou d'émission (22).

6. Procédé selon l'une des revendications précédentes, **caractérisé en ce que** les paramètres de soudage réglés par le dispositif d'entrée et/ou d'émission (22) sont transmis au dispositif de commande (4) à la suite de quoi le dispositif de commande (4) calcule des valeurs de consigne pour le processus de soudage correspondant, et les composants individuels de l'appareil à souder (1) sont commandés conformément aux réglages prédéfinis et/ou valeurs calculées.

7. Procédé selon l'une des revendications précédentes, **caractérisé en ce que** la vitesse de soudage est surveillée par l'appareil à souder (1) respectivement par le dispositif de commande (4) et/ou un dispositif de commande externe subordonné ou asservi, par exemple un système à programme enregistré ou un ordinateur.

8. Procédé selon l'une des revendications précédentes, **caractérisé en ce que** les paramètres de soudage individuels pour former une mesure a(64) sont affichés successivement respectivement d'une manière cyclique au dispositif d'entrée et/ou d'émission (22).

9. Procédé selon l'une ou plusieurs des revendications précédentes, **caractérisé en ce que** le paramètre de soudage pour la vitesse de soudage, en particulier la vitesse de soudage à laquelle est habitué un utilisateur, peut être stockée dans un dispositif de stockage (29).

10. Procédé selon la revendication 9, **caractérisé en ce que** pour le calcul de la soudure d'angle prédéfinie, la vitesse de soudage stockée dans le dispositif de stockage (29), en particulier la vitesse de soudage spécifique à l'utilisateur, est utilisée.

11. Procédé selon l'une des revendications précédentes, **caractérisé en ce que** par le dispositif de commande (4) les autres paramètres de soudage calculés sont modifiés de façon que le paramètre de soudage réglé par l'utilisateur, en particulier la vitesse de soudage spécifique à l'utilisateur, puisse être conservée.

12. Procédé selon l'une des revendications précédentes, **caractérisé en ce que** la vitesse de soudage, en particulier le guidage du chalumeau (10), est détectée respectivement déterminée par l'appareil de soudage (1), en particulier par le dispositif de commande (4).

13. Procédé selon l'une des revendications précédentes, **caractérisé en ce qu'**on utilise pour la détection de la vitesse de soudage dans l'appareil à souder (1) un dispositif de mesure de la vitesse.

14. Procédé selon la revendication 13, **caractérisé en ce qu'**avant le démarrage d'un processus de soudage, le dispositif de commande (4) procède à un calibrage du dispositif de mesure de la vitesse, et à cette fin, le dispositif de commande (4) détermine une tension totale entre les contacts de mesure (73 à 75) disposés à la pièce (16).

15. Procédé selon l'une des revendications précédentes, **caractérisé en ce que** le dispositif de commande (4) détermine des tensions partielles individuelles (80, 81) entre un contact de mesure (75) au chalumeau et au moins deux autres contacts de mesure (73, 74) à la pièce (16), et ensuite sur la base de la modification des tensions partielles (80, 81), par rapport à une durée préréglable, la vitesse de soudage est déterminée par le dispositif de commande (4).

16. Procédé selon la revendication 15, **caractérisé en ce que** la détermination respectivement la mesure de la tension partielle (80; 81) est effectuée par le dispositif de commande (4) continuellement ou à des intervalles déterminés.

17. Procédé selon l'une des revendications précédentes, **caractérisé en ce que** conformément à la vitesse de soudage déterminée, au moins un organe d'affichage (76 à 78) disposé au chalumeau (10) est activé par le dispositif de commande (4).

18. Procédé selon l'une des revendications précédentes, **caractérisé en ce que** par le dispositif de commande (4) une énergie de trajet est déterminée, où les valeurs requises pour le calcul de l'énergie de trajet sont entrées par le dispositif d'entrée et/ou d'émission (22).

19. Procédé selon la revendication 18, **caractérisé en ce que** par le dispositif de commande (4), en fonction de l'énergie de trajet, l'apport de chaleur est calculé, où les multiplicateurs requis pour le calcul sont appelés d'un tableau stocké dans le dispositif de stockage (29).

20. Procédé selon l'une des revendications précédentes, **caractérisé en ce qu'**une puissance de fusion est déterminée par le dispositif de commande (4) par le poids spécifique du matériau d'addition, en particulier du fil d'apport (13).

21. Dispositif de commande (4) pour un appareil à souder (1) respectivement une source de courant (2), constitué d'un dispositif d'entrée et/ou d'émission (22) relié au dispositif de commande (4), de préférence à une commande à microprocesseur, pour des paramètres de soudage comme par exemple un courant de soudage, un diamètre de fil d'apport, un procédé de soudage, une face ou une section transversale d'une soudure d'angle, un dispositif de stockage (29) pour les données de fonctionnement et une partie de puissance (3), en particulier une source de courant onduleur (31), où pour le réglage de la face ou de la section transversale de la soudure d'angle, il est prévu à l'installation d'entrée et/ou d'émission (22) une possibilité de réglage apte à être activée pour un dimensionnement de la soudure d'angle, qui est représentée en particulier par un organe d'affichage (66) sous la forme d'une diode luminescente et comme symbole (50) à une plaque frontale (46), où lors d'une possibilité de réglage activée, une valeur pour le dimensionnement de la soudure d'angle, qui est réalisée sous la forme d'une mesure d'épaisseur de soudure a ou d'une mesure de largeur de soudure b ou d'une mesure de branche z, peut être entrée à l'installation d'entrée et/ou d'émission (22) et, dans le dispositif de stockage (4) de l'appareil à souder (1), des valeurs de consigne sont stockées qui, lors du réglage de la face ou de la section transversale de la soudure d'angle, peuvent être réglées et/ou modifiées par le dispositif d'entrée et/ou d'émission (22), où lors du soudage, un dispositif de mesure de vitesse pour détecter la vitesse de soudage est associé à l'appareil à souder (1), et le calcul des paramètres de soudage est adapté lors du soudage continuellement de façon à obtenir une soudure d'angle prédéfinie.

22. Dispositif de commande selon la revendication 21, **caractérisé en ce que** le dispositif de mesure de vitesse est réalisé par des composants de matériel et de logiciel.

23. Dispositif de commande selon la revendication 22, **caractérisé en ce que** le composant matériel est formé par deux contacts de mesure (73, 74) disposés à la pièce (16) et un contact mesure (75) disposé au chalumeau (10).

24. Dispositif de commande selon l'une des revendications 21 à 23, **caractérisé en ce que** le dispositif de mesure de vitesse est formé par un pont de résistance à la pièce (16).

**Fig.1**

EP 1 077 784 B1

**Fig.2**

EP 1 077 784 B1

Fig.3

EP 1 077 784 B1

# Fig.4

# Fig.5

# Fig.6

Fig.7